# EUROPÄISCHE PATENTANMELDUNG

(11) **EP 1 454 926 A1**
(43) Veröffentlichungstag der Anmeldung: **08.09.2004**
(21) Anmeldenummer: 04001164.5
(22) Anmeldetag: 21.01.2004
(51) Int. Cl.: C08F 10/00, C07F 15/00, C07F 15/04, C07F 9/50, C08F 4/70, C08F 4/04

(54) **Monometallische Azokomplexe später Übergangsmetalle für die Polymerization von Olefinen**

(30) Priorität: 03.02.2003 DE 10304158
(71) Anmelder: Bayer Aktiengesellschaft, 51368 Leverkusen (DE)
(72) Erfinder: Weiss, Thomas, 68259 Mannheim-Freudenheim (DE)

(57) **Zusammenfassung**

Die vorliegende Erfindung betrifft Verbindungen von Übergangsmetallen mit Azoliganden, ein Verfahren zu ihrer Herstellung, die Verwendung dieser Verbindungen als Katalysatoren, ein Verfahren zur Olefin-(Co)-Polymerisation mit Hilfe dieser Verbindungen, Reaktionsprodukte dieser Verbindungen mit Cokatalysatoren, das Olefin-(Co)-Polymere, die Verwendung dieser Olefin-(Co)-Polymere zur Herstellung von Formteilen sowie Formteile, die aus den Olefin-(Co)-Polymeren hergestellt werden.

## Beschreibung

Die vorliegende Erfindung betrifft Verbindungen von Übergangsmetallen mit Azoliganden, ein Verfahren zu ihrer Herstellung, die Verwendung dieser Verbindungen als Katalysatoren, ein Verfahren zur Olefin-(Co)-Polymerisation mit Hilfe dieser Verbindungen, Reaktionsprodukte dieser Verbindungen mit Cokatalysatoren, das Olefin-(Co)-Polymere, die Verwendung dieser Olefin-(Co)-Polymere zur Herstellung von Formteilen sowie Formteile, die aus den Olefin-(Co)-Polymeren hergestellt werden.

Es besteht ein großer Bedarf an Katalysatorverbindungen, die zur Polymerisation von Olefinen in Gegenwart von polaren Zusätzen geeignet sind.

Die Polyolefinindustrie arbeitet mit Verfahren, die mit Hilfe von verschiedenen Katalysatoren und Radikalinitiatorsystemen Ethen sowie andere nichtpolare 1-Olefine polymerisiert. Solche Polymerisationen können durch die Nutzung organometallischer Ziegler-Natta-Koordinationskatalysatoren, Chromkatalysatoren und jüngst mit metallocenartigen Verbindungen früher Übergangsmetalle, wie auch Radikalinitiatoren durchgeführt werden. Weiterhin zeigt sich, dass diese Katalysatoren sehr empfindlich auf eine Reihe von Substanzen reagieren, die die katalytische Aktivität beeinträchtigen oder gänzlich verhindern. Beispielsweise ist bekannt, dass Spuren von Sauerstoff, Kohlenmonoxid, Wasser, oder sauerstoffhaltigen organischen Verbindungen, die als Donoren wirken eine Deaktivierung dieser Katalysatoren verursachen können. Wenn solche Substanzen vorhanden sind, limitiert sich der Einsatz von Katalysatoren normalerweise auf Radikalinitiatorsysteme.

Um diesen Umstand zu verbessern und auch polare Monomere zu copolymerisieren, wurden Katalysatoren auf Basis später Übergangsmetalle entwickelt. Übersichtsartikel finden sich in Mecking, S. *Angew. Chem.* **2001,** *113,* 550; Ittel,S., Johnson, L.K. und Brookhart M. *Chem Rev.* **2000**, *100,* 1169 und Boffa, L.S.; Novak, B.M in *Chem. Rev.* **2000,** *100,* 1479.

Typischerweise werden die eingesetzten Komplextypen eingeteilt in solche mit anionischen Ligandengerüsten bzw. in solche mit neutralen Ligandengerüsten. Die Gruppe von Komplexen mit anionischen Ligandengerüst zeigen aufgrund der ungeladenen, (neutralen) aktiven Polymerisationsspezies besonders robuste Eigenschaften im Hinblick auf obengenannte Katalysatorgifte. Ursächlich ist die auftretende geringere Lewisacidität der katalytischen Spezies. Daher stehen gerade solche Katalysatortypen im Blickfeld des aktuellen Forschungsinteresses. So beschreiben Ostoja Starzewski und K.A.; Witte in J. *Angew. Chem.* **1987,** *99*, 76 solche Katalysatoren mit einem [P,O]-Ligandtypen. Von ähnliche Katalysatoren berichten auch Klabunde, U.; Ittel, S.D in *J. Mol. Catal.* **1987**, *41,* 123. Auch in US-A 5,175,326 werden vergleichbare Katalysatoren [P,O]-Komplexe offenbart.

Konzeptionell ähnlich zu [P,O]-Komplexe wurde eine neue Katalysatorklasse A entwickelt, die anstelle des Phosphordonors einen iminischen Stickstoffdonor aufweist.

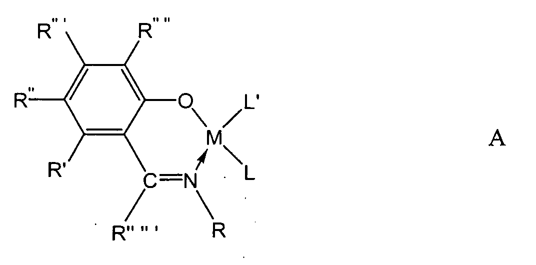

Gemeinsames Merkmal sind große sterische Reste R und R"", die die apicalen Positionen um das Metallzentrum möglichst abschirmen.

Die entsprechenden Verfahren zur Herstellung solcher Katalysatoren sind in WO 98/30609, WO 98/42664, WO 98/42665, DE-A 199 61 340, WO 00/56785, WO 01/92347und WO 02/08236 näher beschrieben.

Überraschend wurde nun gefunden, dass sich auch spezielle Azofarbstoffe zur Komplexierung in die Reihe von anionischen Ligandensystemen einfügen lassen. Azofarbstoffe stellen eine bereits gut untersuchte Verbindungsklasse da, die zudem in großtechnischem Maßstab synthetisierbar sind.

In *Macromolecules,* **2002,** 35, 6071 werden von Schröder, D.L.; Keim, W.; Zuideveld, M.A.; Mecking, S. derartige Liganden zur Herstellung von Single-Site-Katalysatoren für die Polymerisation von Olefinen offenbart. Eine Aktivierung mit unterschiedlichsten Lewissäuen in Gegenwart von polaren Zusätzen sowie sterisch anspruchsvolle otho-substituierte Verbindungen, die eine besonderen Einfluss auf die Aktivität und die Molmasse haben, werden jedoch nicht offenbart.

In EP-A 1 170 308 werden Liganden beschrieben, die ebenfalls eine Azofunktion aufzeigen aber im Gegensatz zu den beanspruchten Komplexen keine Sauerstoff-Metall-Bindung sondern eine amidartige Stickstoff-Metall-Bindung zeigen. Auch werden keine Übergangsmetallverbindungen mit späten Übergangselementen offenbart. Es werden keine sterisch anspruchvollen Substituenten in ortho-Position zum amidartigen Stickstoff in derartigen Komplexen beschrieben.

DE-A 123747 offenbart ein monometallischen, chelatisierenden Azo-Liganden, der neben der Azo-Donorfunktion eine Metall-Kohlenstoff(Phenyl)-Bindung, also keine Sauerstoff-Metall-Bindung sondern eine carbanionische Phenyl-Metall-Bindung aufweist. Da nachgewiesenermaßen Metall-Phenylbindungen des Nickels polymerisationsaktiv sind, würde der in DE-A 123747 postulierte Komplex während der Polymerisation nicht chelatartig das Metallzentrum koordiniert. Nachteilig bei diesem Verfahren ist damit die Veränderung der Geometrie des Metallkomplex während der Polymerisation. Somit sind keine guten Ergebnisse bezüglich der Einheitlichkeit der Polymere zu erwarten.

Die Aufgabe der vorliegenden Erfindung ist es daher Verbindungen bereit zustellen, die auch in Gegenwart von polaren Zusätzen eine Olefin-(Co)-Polymerisation ermöglichen.

Diese Aufgabe wird gelöst durch Verbindungen der allgemeinen Formel (I) 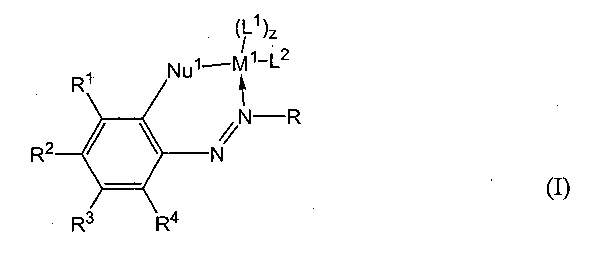 wobei
- Nu¹: für -O, -S, -Se, -PR^{a}, -NR^{a} oder -COO-Gruppen,
- R^{a}: für Wasserstoff, Alkyl- oder Arylreste steht und
- R, R¹, R², R³ und R⁴: gleich oder verschiedene Reste sind, die unabhängig voneinander ausgewählt sind aus der Gruppe bestehend aus H, Halogenen, substituierten oder unsubstituierten C₁-C₈-Alkyl-, C₂-C₈-Alkenyl-, C₃-C₁₂-Cycloalkyl-, C₇-C₁₃-Aralkyl- und C₆-C₁₄-Arylgruppen und R¹ mit R², R³ oder R⁴ und R² mit R³ oder R⁴ einen Ring ausbilden kann,
- M¹: für ein Element der 4. bis 12. Nebengruppe des Periodensystems steht,
- L¹: ein Neutralligand ist und
- L²: ein anionischer Ligand ist, wobei L¹ und L² miteinander durch eine oder mehrere kovalente Bindungen verknüpft sein können und
- z: eine ganze Zahl von 1 bis 3 ist.

Vorteilhaft werden Verbindung eingesetzt, wobei
- Nu¹: O ist,
- R: ausgewählt ist aus der Gruppe bestehend aus substituierten oder unsubstituierten C₆-C₁₄-Aralkylgruppen,
- R¹, R², R³ und R⁴: gleich oder verschiedene Reste sind und unabhängig voneinander ausgewählt sind aus der Gruppe bestehend aus H, substituierten oder unsubstituierten C₁-C₈-Alkylgruppen, C₂-C₈-Alkenylgruppen, C₃-C₁₂-Cycloalkylgruppen, C₇-C₁₃-Aralkylgruppen und C₆-C₁₄-Arylgruppen,
- M¹: ausgewählt ist aus der Gruppe bestehend aus Ti, Zr, Hf, Cr, V, Fe, Co, Ni, Ru, Rh, Pd, Os, Ir, Pt, Cu, Ag, Au, Zn, Cd und Hg
- L¹: ein organischer oder anorganischer Neutralligand ist, ausgewählt aus der Gruppe bestehend aus Phospanen, der allgemeinen Formel (R¹³)ₓPH_{3-x,} Amine mit der allgemeinen Formel (R¹³ )ₓNH_{3-x,} Ether mit der allgemeinen Formel (R¹³)₂O, Alkohole mit der allgemeinen Formel (R¹³)OH, Pyridinderivate mit der allgemeinen Formel C₅H₅₋ₓ(R¹³)ₓN, CO, C₁-C₁₂-Alkylnitrilen, C₆-C₁₄-Arylnitrilen und einfach oder mehrfach ethylenisch ungesättigte Doppelbindungssysteme, wobei
- R¹³: ausgewählt ist aus der Gruppe bestehend aus H, C₁-C₈-Alkylgruppen, Benzylresten und C₆-C₁₄-Arylgruppen und
- x: für eine ganze Zahl von 0 bis 3 steht und
- L²: ein anionischer Ligand ist, ausgewählt aus der Gruppe bestehend aus Halogenidionen, Amidanionen der Formel R¹⁴R¹⁵N, C₁-C₆-Alkylanionen, Allylanionen, Methallylanionen, Benzylanionen und Arylanionen, wobei
- R¹⁴ und R¹⁵: unabhängig voneinander ausgewählt sind aus der Gruppe bestehend aus H, C₁-C₈-Alkylgruppen, Benzylresten und C₆-C₁₄-Arylgruppen und R¹⁴ mit R¹⁵ auch kovalent verknüpft sein kann und
- z: eine ganze Zahl von 1 bis 3 sein kann.

Vorteilhaft sind es Verbindungen wobei
- Nu¹: O ist,
- R: Mesityl, 2,4,6-Trimethylphenyl oder 2,6-Diisopropylphenyl ist,
- R¹, R², R³ und R⁴: gleich oder, verschiedene Reste sind und unabhängig voneinander ausgewählt sind aus der Gruppe bestehend aus H, C₁-C₈-Alkylgruppen und C₆-C₁₄-Arylgruppen,
- M¹: ausgewählt ist aus der Gruppe bestehend aus Ti, Zr, Cr, V, Fe, Co, Ni, Pd, Cu und Zn
- L¹: ein Neutralligand ist, ausgewählt aus der Gruppe bestehend aus Triphenylphosphin, Triethylphosphin, Trimethylphosphin Dibenzophosphol, Triphenylphosphit, Triethylphosphit, Trimethylphosphit, Triphenylphosphit, Trimethylamin, Triethylamin, Dimethylanilin, Diethylanilin, Benzyldimethylamin, Benzyldieethylamin, Diisopropylamin, Diethylamin, Dimethylamin, Diphenylamin, Diethylether, Tetrahydrofuran, Wasser, Methanol, Ethanol, Pyridin, 2-Picolin, 3-Picolin, 4-Picolin, 2,3-Lutidin, 2,4-Lutidin, 2,5-Lutidin, 2,6-Lutidin, 3,5-Lutidin, CO, Acrylnitril, Acetonitril, Propionitril, Butyronitril, Benzonitril, Ethenyl, Propenyl, cis-2-Butenyl, trans-2-Butenyl, Cyclohexenyl und Norbornenyl,
- L²: ein anionischer Ligand ist, ausgewählt aus der Gruppe bestehend aus Chlorid, Bromid, Dimethylamid, Diethylamid, Amid, Allyl, Methyl, Ethyl, n-Propyl, 1-Propyl, n-Butyl, tert.-Butyl, Hexyl und Phenyl
- z: eine ganze Zahl von 1 bis 3 sein kann.

Besonders vorteilhafte erfindungsgemäße Verbindungen sind solche wobei
- Nu¹: O ist,
- R: Mesityl oder 2,6-Diisopropylphenyl,
- R¹: tert.-Butyl oder Phenyl,
- R²: H,
- R³: tert.-Butyl,
- R⁴: H,
- M¹: Ni oder Pd,
- L': Triphenylphosphan oder Pyridin,
- L²: Phenyl oder Methyl und
- z: eine ganze Zahl von 1 bis 3 ist.

Ein weiterer Gegenstand der Erfindung ist ein Verfahren zur Herstellung der erfindungsgemäßen Verbindungen, wobei ein Liganden der allgemeinen Formel II 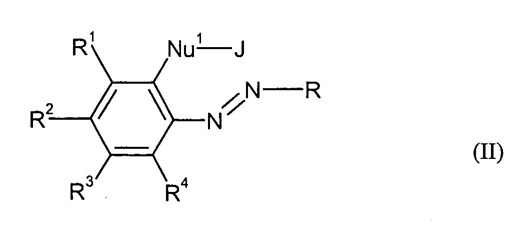 mit
- J: ausgewählt aus der Gruppe bestehend aus H, und einem Element der 1. oder 2. Hauptgruppe des Periodensystems und wobei
- Nu¹, R, R¹, R², R³, R⁴: die gleiche Bedeutung haben wie oben,
mit 0,2 bis 5 Äquivalenten einer Metallverbindung der allgemeinen Formeln
M¹X₄,M¹X₃, M¹L¹L², oder M¹X₂
umgesetzt wird, wobei
- M¹, L¹ und L²: die gleiche Bedeutung haben wie oben und
- X: ausgewählt ist aus der Gruppe bestehend aus Halogen, C₁-C₈-Alkyl-, C₃-C₁₂-Cycloalkyl-, C₇-C₁₃-Aralkyl- und C₆-C₁₄-Arylgruppen und wobei M¹X₄, M¹X₃ oder M¹X₂ durch weitere Neutralliganden stabilisiert werden können.

Vorteilhaft wird das Verfahren zur Herstellung der erfindungsgemäßen Verbindungen so durchgeführt, dass die Verbindungen nach Umsetzung des Liganden mit den Metallverbindungen durch Kristallisation gereinigt und isoliert werden.

Vorteilhaft wird das Verfahren zur Herstellung der erfindungsgemäßen Verbindungen so durchgeführt, dass der Ligand und die Metallverbindung in Gegenwart eines oder mehrerer olefinischer Monomere in situ umgesetzt wird.

Vorteilhaft wird das Verfahren zur Herstellung der erfindungsgemäßen Verbindungen in aprotischen polaren Lösungsmitteln durchgeführt.

Ein weiter Gegenstand der Erfindung ist die Verwendung der erfindungsgemäßen Verbindungen als Katalysatoren.

Vorteilhaft werden die erfindungsgemäßen Verbindungen als Polymerisationskatalysatoren verwendet.

Ein weiterer Gegenstand der Erfindung ist ein Verfahren zur Herstellung von Olefin-(Co)-Polymeren, wobei die erfindungsgemäßen Verbindungen in Gegenwart von olefinischen Monomeren ausgewählt aus der Gruppe bestehend aus 1-Olefinen, Cycloolefinen, funktionalisierten 1-Olefinen und Mischungen derselben umgesetzt werden.

Vorteilhaft wird dieses Verfahren in Gegenwart von Bor- oder Aluminiumverbindungen als Cokatalysatoren durchgeführt.

Vorteilhaft liegt das Molverhältnis von Cokatalysator zu Metall M' in der erfindungsgemäßen Verbindung im Bereich von 1:10 bis 1: 10000 für das Verfahren zur Polymerisation.

Vorteilhaft werden im Verfahren zur Polymerisation Aluminiumoxane als Cokatalysatoren eingesetzt.

Vorteilhaft wird das Verfahren zur Polymerisation in polaren Lösemitteln oder Lösemittelgemischen durchgeführt wird.

Ein weiterer Gegenstand der Erfindung sind Reaktionsprodukte, die durch Umsetzung der erfindungsgemäßen Verbindungen mit den Cokatalysatoren entstehen.

Ein weiterer Gegenstand der Erfindung ist das Olefin-(Co)-Polymer, das durch die Polymerisation in Gegenwart der erfindungsgemäßen Verbindungen hergestellt wird.

Ein weiterer Gegenstand der Erfindung ist die Verwendung des Olefin-(Co)-Polymer zur Herstellung von Formteile aller Art.

Ein weiterer Gegenstand der Erfindung sind Formteile, die durch die Verarbeitung des Olefin-(Co)-Polymers erhältlich sind.

In den Verbindungen der allgemeinen Formel (I) 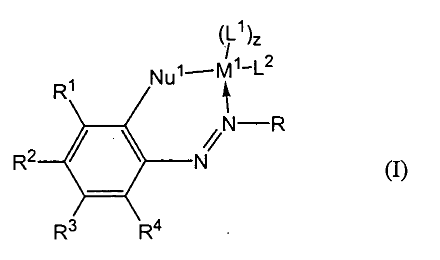 ist Nu¹ ausgewählt aus der Gruppe bestehend aus -O, -S, -Se, -PR^{a}, -NR^{a}, oder -COO-Gruppen, wobei R^{a} für Wasserstoff, Alkyl- oder Arylreste steht. Bevorzugt wird für Nu¹ O, NR^{a} und COO-Gruppen eingesetzt. Ganz besonders bevorzugt steht Nu' für Sauerstoff.

R, R¹, R², R³ und R⁴ sind dabei gleich oder verschiedene Reste, die unabhängig voneinander ausgewählt sind aus der Gruppe bestehend aus H, Halogenen, substituierten oder unsubstituierten C₁-C₈-Alkyl-, substituierte oder unsubstituierten C₂-C₈-Alkenyl-, substituierte oder unsubstituierte C₃-C₁₂-Cycloalkyl-, substituierte oder unsubstituierte C₇-C₁₃-Aralkyl- und substituierte oder unsubstituierte C₆-C₁₄-Arylgruppen, substituierten oder unsubstituierten Nitrogruppen und R¹ kann mit R², R³ oder R⁴ und R² kann mit R³ oder R⁴ einen Ring ausbilden.

R, R¹, R², R³ und R⁴ können alle Halogene wie Fluor, Chlor, Brom und Iod sein. Bevorzugte sind Fluor und Chlor.

R, R¹, R², R³ und R⁴ können alle substituierten oder unsubstituierte Alkylreste sein, die die oben genannte C-Atomzahl in der Grundkette enthalten. Bevorzugte unsubstituierte Alkylreste sind Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl. Besonders bevorzugt sind C₁-C₆-Alkylgruppen wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethyl-propyl, iso-Amyl, n-Hexyl, iso-Hexyl, sec.-Hexyl. Ganz besonders bevorzugt sind C₁-C₄-Alkylgruppen wie Methyl, Ethyl, n-Propyl, iso-Propyl, n-Butyl, iso-Butyl, sec.-Butyl und tert.-Butyl, wobei diese Gruppen jeweils ein oder mehrere weitere Substituenten tragen können. Bevorzugte weitere Substituenten sind alle Halogenatome, besonders bevorzugt sind Fluor, Chlor und Brom. Insbesondere ganz besonders bevorzugt sind Fluormethyl, Difluormethyl, Trifluormethyl, Chlormethyl, Dichlormethyl, Trichlormethyl, Brommethyl, Dibrommethyl, Tribrommethyl, Petafluorethyl, Perfluorpropyl, und Perfluorbutyl. Ganz besonders bevorzugt sind Fluormethyl, Difluormethyl, Trifluormethyl und Perfluorbutyl.

R, R¹, R², R³ und R⁴ können alle substituierten oder unsubstituierten Alkenylreste sein, die die oben genannte C-Atomzahl in der Grundkette enthalten. Bevorzugte unsubstituierte Alkenylgruppen sind Alkenylgruppen mit ein bis vier isolierten oder konjugierten Doppelbindungen. Besonders bevorzugt sind Vinyl, 1-Allyl, 3-Allyl, ω-Butenyl, ω-Pentenyl, ω-Hexenyl, 1-cis-Buta-1,3-dienyl und 1-cis-Hexa-1,5-dienyl, wobei diese Gruppen jeweils noch weitere Substituenten tragen können. Bevorzugte substituierte Alkenylgruppen sind Isopropenyl, 1-Isoprenyl, α-Styryl, β-Styryl, 1-cis-1,2=Phenylethenyl und 1-trans-1,2-Phenylethenyl.

R, R¹, R², R³ und R⁴ können alle substituierten oder unsubstituierten Cycloalkylreste sein, die die oben genannte C-Atomzahl im Ring enthalten. Bevorzugte unsubstituierte Cycloalkyle sind Cyclopropyl, Cyclobutyl, Cyclopentyl, Cyclohexyl, Cycloheptyl, Cyclooctyl, Cyclononyl, Cyclodecyl, Cycloundecyl und Cyclododecyl. Besonders bevorzugt sind Cyclopentyl, Cyclohexyl und Cycloheptyl. Die Cyloalkyle können noch weitere Substituenten tragen. Bevorzugte substituiere Cycloalkylgruppen sind 2-Methylcyclopentyl, 3-Methylcyclopentyl, cis-2,4-Dimethylcyclopentyl, trans-2,4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thiomethylcyclopentyl und 3-Thiomethylcyclohexyl.

R, R¹, R², R³ und R⁴ können alle substituierten oder unsubstituierten Aralkylreste sein, die die obengenannte C-Atomzahl entlang der Hauptkette enthalten. Bevorzugt unsubstituierte Aralkylreste sind C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl. Besonders bevorzugt ist Benzyl. Die Substituenten für die Aralkylreste sind Alkyl-, Aryl-, Aralkyl-, Alkoxy-,Aryloxy-, Aralkyloxy-, Dialkylamino-, Halogen-, Keto und Hydroxyl.

R, R¹, R², R³ und R⁴ können alle substituierten oder unsubstituierten Arylgruppen sein, die die obengenannte C-Atomzahl innerhalb des Ringes enthalten. Bevorzugte unsubstituierte Arylreste sind Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl. Ganz besonders bevorzugt sind Phenyl, 1-Naphthyl und 2-Naphthyl. Insbesondere bevorzugt ist Phenyl. Diese Arylgruppen können weitere Substituenten tragen.

Unter den substituierten Alkyl-, Alkenyl-, Cycloalkyl-, Aralkyl- und Arylgruppen sind nicht nur die bereits bevorzugten Substituenten zu nennen sondern auch:
- substituierte und/oder unsubstituierte C₁-C₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethyl-propyl, iso-Amyl, n-Hexyl, iso-Hexyl, sec.-Hexyl, n-Heptyl, iso-Heptyl und n-Octyl. Bevorzugt sind C₁-C₆-Alkyl, besonders bevorzugt C₁-C₄-Alkyl wie Methyl, Ethyl, n-Propyl, iso-Propyl, n-Butyl, iso-Butyl, sec.-Butyl und tert.-Butyl. Unter den substituierten C₁-C₈-Alkylgruppen sind ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl zu verstehen. Besonders bevorzugt sind Fluormethyl, Difluormethyl, Trifluormethyl und Perflurobutyl.
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl. Bevorzugt sind Cyclopentyl, Cyclohexyl und Cycloheptyl.
- C₇-C₁₃-Aralkyl, bevorzugt sind C₇-C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl. Besonders bevorzugt ist Benzyl.
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl. Bevorzugt sind Phenyl, 1-Naphthyl und 2-Naphthyl. Ganz besonders bevorzugt ist Phenyl.
- ein oder mehrere unabhängig voneinander ausgewählte Halogene wie Fluor, Chlor, Brom oder Iod. Besonders bevorzugt sind Fluor und/oder Chlor.
- Nitro und/oder Nitrosogruppen. Besonders bevorzugt ist Nitro.
- C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy. Besonders bevorzugt sind Methoxy, Ethoxy, n-Propoxy und n-Butoxy.
- C₆-C₁₄-Aryloxygruppen wie Phenoxy, ortho-Kresyloxy, meta-Kresyloxy, para-Kresyloxy, α-Naphthoxy, β-Naphthoxy oder 9-Anthryloxy.
- Silylgruppen der allgemeinen Formel SiR¹⁰R¹¹R¹², wobei R¹⁰, R¹¹ und R¹² unabhängig voneinander ausgewählt sind aus der Gruppe bestehend aus Wasserstoff, C₁-C₈-Alkylgruppen, Benzylresten und C₆-C₁₄-Arylgruppen. Bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe. Besonders bevorzugt sind die Trimethylsilylgruppe und die tert.-Butyldimethylsilylgruppe.
- Silyloxygruppen OSiR¹⁰R¹¹R¹², wobei R¹⁰, R¹¹ und R¹² unabhängig voneinander ausgewählt sind aus der Gruppe bestehend aus Wasserstoff, C₁-C₈-Alkylgruppen, Benzylresten und C₆-C₁₄-Arylgruppen. Bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe. Besonders bevorzugt sind die Trimethylsilyloxygruppe und die tert.-Butyldimethylsilyloxygruppe.
- fünf- bis sechsgliedrige stickstoffhaltige Heteroarylreste wie *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl. Diese fünf- bis sechsgliedrigen stickstoffhaltigen Heteroarylreste können nun weitere Substituenten enthalten wie C₁-C₈-Alkylgruppen. Bevorzugt sind hier Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl. Besonders bevorzugt sind C₁-C₆-Alkylgruppen. Ganz besonders bevorzugt sind C₁-C₄-Alkylgruppen wie Methyl, Ethyl, n-Propyl, iso-Propyl, n-Butyl, iso-Butyl, sec.-Butyl und tert.-Butyl. Auch diese C₁-C₈-Alkylgruppen an den Heteroarylrestenn können weitere Substituenten tragen. Dazu gehören:
- halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl. Besonders bevorzugt sind Fluormethyl, Difluormethyl, Trifluormethyl und Perfluorbutyl.
- C₃-C₁₂-Cycloalkyle wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl. Bevorzugt sind Cyclopentyl, Cyclohexyl und Cycloheptyl;
- C₇-C₁₃-Aralkyle. Bevorzugt sind C₇- bis C₁₂-Phenylalkyle wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl. Besonders bevorzugt ist Benzyl.
- C₆-C₁₄-Aryle. Bevorzugt sind Phenyl, 1-Naphthyl, 2-Naphthyl, 1-Anthryl, 2-Anthryl, 9-Anthryl, 1-Phenanthryl; 2-Phenanthryl, 3-Phenanthryl, 4-Phenanthryl und 9-Phenanthryl. Besonders bevorzugt sind Phenyl, 1-Naphthyl und 2-Naphthyl. Ganz besonders bevorzugt ist Phenyl.
- Halogene, wie Fluor, Chlor, Brom oder Iod. Besonders bevorzugt sind Fluor oder Chlor.
- C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy. Besonders sind bevorzugt Methoxy, Ethoxy, n-Propoxy und n-Butoxy.
- C₆-C₁₄-Aryloxygruppen wie Phenoxy, ortho-Kresyloxy, meta-Kresyloxy, *para*-Kresyloxy, α-Naphthoxy, β-Naphthoxy oder 9-Anthryloxy.
- Silylgruppen SiR¹⁰R¹¹R¹², wobei R¹⁰ , R¹¹ und R¹² unabhängig voneinander ausgewählt sind aus der Gruppe bestehend aus Wasserstoff, C₁-C₈-Alkylgruppen, Benzylresten und C₆-C₁₄-Arylgruppen. Bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe. Besonders bevorzugt sind die Trimethylsilylgruppe und die tert.-Butyldimethylsilylgruppe.
- Silyloxygruppen OSiR¹⁰R¹¹R¹², wobei R¹⁰ , R¹¹ und R¹² unabhängig voneinander ausgewählt sind aus der Gruppe bestehend aus Wasserstoff, C₁-C₈-Alkylgruppen, Benzylresten und C₆-C₁₄-Arylgruppen. Bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe. Besonders bevorzugt sind die Trimethylsilyloxygruppe und die tert.-Butyldimethylsilyloxygruppe.

In einer bevorzugten Ausführungsform ist der Rest R ausgewählt aus der Gruppe bestehend aus Mesityl, 2,4,6-Trimethylphenyl oder 2,6-Diisopropylphenyl. Bevorzugt ist R Mesityl oder 2,6-Diisopropylphenyl. Die Reste R¹ und R³ sind bevorzugt ausgewählt aus der Gruppe bestehend aus H, C₁-C₈-Alkylen, C₆-C₁₄-Arylen, substituierten oder unsubstituierten Nitrogruppen, Fluor und Chlor. Bevorzugt sind R¹ und R³ ausgewählt aus der Gruppe bestehend aus tert.-Butyl und Phenyl. R² und R⁴ sind bevorzugt Wasserstoff.

In einer weiteren Ausführungsform können die Reste R¹ bis R⁴ miteinander zu einem 5 bis 12-gliedrigen Ring verbunden sein. So können an den Positionen von R¹ und R², R¹ und R³, R¹ und R⁴, R² und R³, R² und R⁴ sowie R³ und R⁴ -(CH₂)₃-(Trimethylen), -(CH₂)₄-(Tetramethylen), - (CH₂)₅-(Pentamethylen), -(CH₂)₆- (Hexamethylen), -CH₂-CH=CH-, -CH₂-CH=CH-CH₂-, - CH=CH-CH=CH-, -O-CH₂-O-, -O-CHMe-O-, -O-CH-(C₆H₅)-O-, -O-CH₂-CH₂-O-, -O-CHMe₂-O--NMe-CH₂-CH₂-NMe-, -NMe-CH₂-NMe- oder -O-SiMe₂-O- mit Me = CH₃-Brücken eingeführt werden.

Das Zentralatom der Verbindung (I) M' ist bevorzugt ausgewählt aus der Gruppe bestehend aus Elementen der 4. bis 12. Nebengruppe des Periodensystem. Bevorzugt sind die Elemente Ti, Zr, Hf, Cr, V, Fe, Co, Ni, Ru, Rh, Pd, Os, Ir, Pt, Cu, Ag, Au, Zn, Cd und Hg. Ganz besonders bevorzugt sind Ti, Zr, Cr, V, Fe, Co, Ni, Pd, Cu und Zn. Insbesondere ganz besonders bevorzugt sind Ni und Pd.

Der Rest L¹ ist ein Neutralligand. Unter Neutralligand sind alle dem Fachmann bekannten Neutralliganden zu nennen. Bevorzugt sind organische oder anorganische Neutralliganden ausgewählt aus der Gruppe bestehend aus Phospanen, der allgemeinen Formel (R¹³)ₓPH_{3-x,} Amine mit der allgemeinen Formel (R¹³)ₓNH_{3-x,} Ether mit der allgemeinen Formel (R¹³)₂O, Alkohole mit der allgemeinen Formel (R¹³)OH, Pyridinderivate mit der allgemeinen Formel C₅H₅₋ₓ(R¹³)ₓN, CO, C₁-C₁₂-Alkylnitrilen, C₆-C₁₄-Arylnitrilen und einfach oder mehrfach ethylenisch ungestättigte Doppelbindungssysteme.

Der Rest R¹³ für die allgemeine Formel der Phosphane, der Amine, der Ether, der Alkohole und der Pyridinderivate ist ausgewählt aus der Gruppe bestehend aus H, C₁-C₈-Alkylgruppen, Benzylgruppe und C₆-C₁₄-Arylgruppen. Unter der Definition von C₁-C₈-Alkylgruppen und C₆-C₁₄-Arylgruppen sind alle substituierten und unsubstituierten Alkyl- und Arylgruppen sowie deren Vorzugsbereiche zu verstehen, die bereits für die Rest R, R¹,R², R³ und R⁴ in dem jeweiligen C-Atomzahlbereich definiert wurden. Der Index x steht für eine ganze Zahl von 0 bis 3. Für die Phosphane und die Amine ist x bevorzugte 3, für die Pyridinderivate ist x bevorzugt 0 oder 1.

Bevorzugte Phosphane für den Rest L¹ sind Triphenylphosphan, Perfluorotriphenylphosphan, Trimethylphosphan, Triethylphosphan, Dibenzophosphol Tricyclohexylphosphan. Bevorzugte Amine sind Trimethylamin, Triethylamin, Dimethybenzylamin. Bevorzugte Ether sind Diethylether, Tetrahydrofuran und Wasser. Bevorzugte Alkohole sind Methanol, Ethanol, Isoporopanol.

Bevorzugte Pyridinderivate sind Pyridin, 2-Picolin, 3-Picolin, 4-Picolin, 2,3-Lutidin, 2,5-Lutidin, 2,6-Lutidin, 3,5-Lutidin. Bevorzugte Alkylnitrile sind, Acetonitril, Propionitril sowie Butyronitril, Malonsäurenitril, Oxalsäurenitril, Bernsteinsäurenitril, Acrylsäurenitril, Fumarsäurenitril, Maleinsäurenitril. Bevorzugte Arylnitrile sind Benzonitril, 2-Naphtylnitril, 1-Naphtylnitril Terephtalsäurenitril. Bevorzugte ethylenisch ungesättigte Doppelbindungssysteme sind Ethenyl, Propenyl, cis-2-Butenyl, trans-2-Butenyl, Cyclohexenyl und Norbornenyl.

Als L¹ sind besonders Triphenylphosphan und Pyridin bevorzugt.

Der Rest L² ist ein anionischer Ligand, der gegebenenfalls mit durch eine oder mehrere kovalente Bindungen mit L¹ verknüpft sein kann. Unter einem anionischen Liganden ist jeder für den Fachmann bekannte anionische Ligand zu verstehen. Bevorzugt sind anionische Liganden ausgewählt aus der Gruppe bestehend aus Halogenidionen, Amidanionen der allgemeine Formel R¹⁴R¹⁵N, C₁-C₆-Alkylanionen, Allylanionen, Methallylanionen, Benzylanionen und Arylanionen.

Die Reste R¹⁴ und R¹⁵ sind dabei unabhängig voneinander ausgewählt aus der Gruppe bestehend aus H, C₁-C₈-Alkylgruppen, Benzylgruppe und C₆-C₁₄-Arylgruppen, wobei R¹⁴ und R¹⁵ auch kovalent verknüpft sein können. Unter der Definition der C₁-C₈-Alkylgruppen und der C₆-C₁₄-Arylgruppen sind alle substituierten und/oder unsubstituierten Alkylgruppen und Arylgruppen sowie deren Vorzugsbereiche zu verstehen, die bereits für die Reste R, R¹, R², R³ und R⁴ in dem jeweiligen C-Atomzahlbereich definiert wurden.

Bevorzugte Halogenidionen für den Rest L² sind Chlorid und Bromid. Bevorzugte Amidanionen sind Amid, Dimethylamid, Diethylamid, Diisopropylamid, Diphenylamid, Anilid, Methylphenylamid Bevorzugte Alkylanionen sind Methyl, Ethyl, n-Propyl, 1-Propyl, n-Butyl, tert.-Butyl und Hexyl. Bevorzugte Allylanionen sind 1,3-arylsubstituierte Allylanionen, 1,3 Bistrimetylsilylsubstituierte Allylanionen aber insbesondere die Stammverbindung C₃H₅⁻. Anionen der Metacrylsäureester 2-arylsubstituierte Metallylanionen und die Stammverbindung C₄H₈⁻ sind die bevorzugten Methallylanionen. Bevorzugte ist weiterhin das Benzylanion. Phenyl ist das bevorzugt Arylanion.

Z ist eine ganze Zahl im Bereich von 1 bis 3, bevorzugt im Bereich von 1 bis 2.

Um die erfindungsgemäßen Verbindungen zu erhalten, werden Liganden der Formel (II) 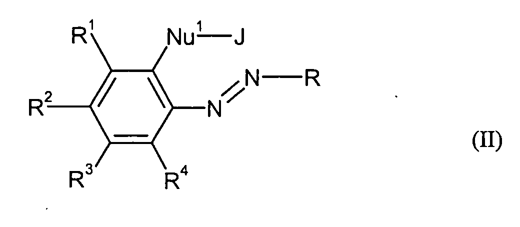 mit Metallverbindungen der allgemeinen Formeln
M¹X₄, M¹X₃, M¹L¹L² oder M¹X₂
.umgesetzt.

Bevorzugte Metallverbindungen der allgemeinen Formel M¹L¹L² sind solche bei denen die Reste L¹ und L² durch eine kovalente Bindung miteinander verknüpft sind. Besonders bevorzugt sind 1,5-Cyclooctadienyl-Liganden ("COD"), 1,6-Cyclodecenyl-Liganden oder 1,5,9-*all-trans*-Cyclododecatrienyl-Liganden.

In einer besonderen Ausführungsform ist L¹ Tetramethylethylendiamin, wobei nur ein Stickstoff mit dem M' koordiniert ist.

Der Rest J steht hierbei für H oder ein Element aus der 1. oder 2. Hauptgruppen des Periodensystems. Bevorzugt wird für J H, Na, Li, Mg, Ca.

Rest X ist ausgewählt aus der Gruppe bestehend aus Halogenen, C₁-C₈-Alkylgruppen, C₃-C₁₂-Cycloalkylgruppen; C₇-C₁₃-Aralkylgruppen und C₆-C₁₄-Arylgruppen.

Unter den Halogen sind Chlor und Brom bevorzugt.

Unter den C₁-C₈-Alkylgruppen sind alle substituierten oder unsubstituierten Alkylgruppen mit dieser C-Atomanzahl zu verstehen. Bevorzugt sind Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethyl-propyl, iso-Amyl, n-Hexyl, iso-Hexyl, sec.-Hexyl. Besonders bevorzugt C₁-C₄-Alkyl wie Methyl, Ethyl, n-Propyl, iso-Propyl, n-Butyl, iso-Butyl, sec.-Butyl und tert.-Butyl.

Unter den C₃-C₁₂-Cycloalkylgruppen sind alle substituierten oder unsubstituierten Cycloalkylgruppen mit diese C-Atomanzahl im Ring zu verstehen. Bevorzugt sind Cyclopropyl, Cyclobutyl, Cyclopentyl, Cyclohexyl, Cycloheptyl, Cyclooctyl, Cyclononyl, Cyclodecyl, Cycloundecyl und Cyclododecyl. Besonders bevorzugt sind Cyclopentyl, Cyclohexyl und Cycloheptyl.

Unter den C₇-C₁₃-Aralkylgruppen sind alle substituierten oder unsubstituierten Aralkylgruppen mit dieser C-Atomanzahl zu verstehen. Bevorzugt sind C₇-C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl. Besonders bevorzugt ist Benzyl.

Unter den C₆-C₁₄-Arylgruppen sind alle substituierten oder unsubstituierten Arylgruppen mit dieser C-Atomanzahl im Ring zu verstehen. Bevorzugt sind Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1 -Naphthyl und 2-Naphthyl. Besonders bevorzugt ist Phenyl.

Dabei können M¹X₂, M¹X₃, M¹X₄ optional durch Neutralliganden stabilisiert werden. Als Neutralliganden sind alle dem Fachmann bekannten Liganden der Komplexchemie zu verstehen. Bevorzugt sind cyclische und nichtcyclische Ether, Amine, Diamine, Nitrile, Isonitrile oder Phosphine und ungesättigte cycloaliphatische Verbindungen. Besonders bevorzugt sind Diethylether, Tetrahydrofuran, 1,2-Dimethoxyethan, Tetramethylethylendiamin, Acetonitril, Triphenylphosphan oder Cyclooctadiene.

Besonders bevorzugt ist der Einsatz dieser Neutralliganden, wenn Ni-Dialkylverbindungen als Metallverbindungen des Typs M¹X₂ eingesetzt werden sollen. Die Neutralliganden können auch als Lösemittel verwendet werden.

Die Verbindungen der Formel (I) können entweder durch Umsetzen der Liganden der Formel (II) mit den Metallverbindungen der Formeln M¹X₄, M¹X₃, M¹L¹L² oder M¹X₂ in situ hergestellt werden oder isoliert werden oder aber durch Umsetzen in Gegenwart von olefinischen Monomeren dargestellt werden.

Die Herstellung der erfindungsgemäßen Verbindungen der allgemeinen Formel (I) erfolgt im Allgemeinen aus Liganden der allgemeinen Formel (II), in denen die Reste wie oben definiert sind. Zur Synthese der erfindungsgemäßen Verbindungen können die Liganden entweder mit Hilfe einer Base vom Rest J befreit werden und anschließend mit Metallverbindungen der allgemeinen Formeln M¹X₂, M¹X₃, M¹X₄ oder M¹(0)-Komplexe wie M¹L¹L² umgesetzt werden oder aber direkt ohne Einsatz einer Base mit dem Metallverbindungen umgesetzt werden.

Als Base können die dem Fachmann bekannten Metallalkyle verwendet werden. Bevorzugt sind Methyllithium, Ethyllithium, n-Butyllithium, sec.-Butyllithium, tert.-Butyllithium, Hexyllithium, Grignard-Verbindungen wie Ethylmagnesiumbromid, weiterhin Lithiumamid, Natriumamid, Kaliumamid, Kaliumhydrid oder Lithiumdiisopropylamid ("LDA"). Als Lösemittel haben sich hochsiedende Lösemittel wie Toluol, ortho-Xylol, meta-Xylol, para-Xylol, Ethylbenzol oder Mischungen derselben als bevorzugt geeignet erwiesen, des Weiteren nichtcyclische oder cyclische Ether wie 1,2-Dimethoxyethan, Tetrahydrofuran oder Diethylether.

Diese Entfernung des Restes J ist im Bereich von 1 min bis 12 Stunden beendet. Bevorzugt ist eine Reaktionsdauer von 2 bis 10 Stunden, insbesondere bevorzugt sind 3 bis 5 Stunden. Während der Reaktion liegt die Temperatur im Bereich von -196 bis 0°C. Bevorzugt ist ein Bereich von -90°C bis -20°C.

Für die Umsetzung des Liganden mit der Base können alle dem Fachmann bekannten aprotischen, polaren oder unpolaren Lösemittel verwendet werden. Bevorzugt sind aprotische, polare Lösemittel wie Methylenchlorid, Acetonitril, Acrylnitril, Benzonitril, Tetrahydrofuran, Diethylether oder Lutidin.

Nach der Umsetzung mit der Base wird dass Lösemittel in der dem Fachmann bekannten Weise vom Produkt entfernt. Der erhaltene metallierte Ligand kann auf die dem Fachmann bekannte Weise gereinigt werden. Bevorzugte Reinigungsmethode ist die Kristallisation.

Bei der Umsetzung des metallierten oder unmetallierten Ligandens der Formel (II) mit den Metallverbindungen der Formeln M¹X₂, M¹X₃, M¹X₄ und M¹L¹L² werden die dem Fachmann bekannten Lösemittel verwendet. Bevorzugte Lösemittel sind Benzol, Toluol, Ethylbenzol, ortho-Xylol, meta-Xylol oder para-Xylol, Chlorbenzol, Cyclohexan, Acetonitril, Tetrahydrofuran, Methylenchlorid oder Gemischen derselben. Die Umsetzung wird in dem dem Fachmann bekannten Temperaturbereich durchgeführt. Bevorzugt wird die Reaktion in einem Temperaturbereich von -100°C bis +150°C, besonders bevorzugt im Bereich von -78°C bis +100°C durchgeführt. Die Umsetzung der Liganden mit den Metallverbindungen wie auch die Umsetzung der Liganden mit den Basen muss unter Sauerstoff- und Feuchtigkeitsausschluss erfolgen.

Das Molverhältnisse zwischen Ligand und M¹ liegt im Bereich von 5:1 bis 1:5. Bevorzugt im Bereich von 1:1 bis 1:3, besonders bevorzugt sind stöchiometrische Mengen.

Die Reinigung der erfindungsgemäßen Verbindungen der allgemeinen Formel (I) erfolgt nach den dem Fachmann bekannten Methoden wie Kristallisation, Filtrationen über Celite® und Chromatographie. Besonders bevorzugt ist die Kristallisation.

Für die Polymerisation ist es nicht notwendig, die erfindungsgemäßen Verbindungen zu isolieren. Man kann auch einen Liganden der allgemeinen Formel (II) mit einer geeigneten Metallverbindung der Formel M¹X₂, M¹X₃, M¹X₄ oder M¹(0)-Komplexe wie M¹L¹L² erst unmittelbar vor der Polymerisation miteinander umsetzen und *in situ* erzeugen.

Wählt man X in der Metallverbindung der Formel M¹X₂, M¹X₃ oder M¹X₄ oder L² in M¹L¹L². aus der Gruppe der C₁-C₆-Alkylgruppen, Benzylanionen oder Arylanionen aus, so kann man auf die Deprotonierung des Liganden der allgemeinen Formel (II) verzichten. In diesen Fällen hat sich als bevorzugt erwiesen, die erfindungsgemäßen Komplexverbindungen nicht zu isolieren, sondern erst unmittelbar vor der Polymerisation *in situ* zu erzeugen.

Die Herstellung der Liganden der allgemeinen Formel (II) gelingt durch Reaktion von Aromaten der allgemeinen Formel (III) 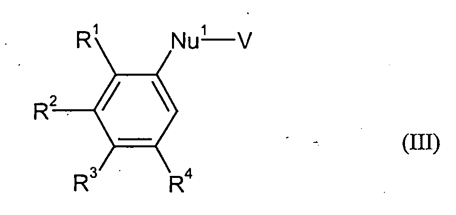 wobei V Wasserstoff, Li, Na, K, Mg, Ca und Sr sein kann,
mit elektrophilen Aryldiazoniumsalzen der allgemeinen Formel (IV)

R―N₂⁺ A⁻ (IV)

in denen die Reste Nu¹, R, R¹, R², R³, R⁴ wie oben definiert sind und A⁻ ein Anion starker Säuren ausgewählt aus der Gruppe bestehend aus F⁻, Cl⁻, Br⁻ , J⁻, SO₄ ²⁻, NO₃⁻, ClO₄⁻, ClO₃⁻, CF₃COO⁻, CF₃SO₃⁻, BF4⁻, PF₆⁻ , B(C₆F₅)₄⁻ und anionischen Metallat-Komplexe, darstellt.

Die Herstellung der Alkali bzw. Erdalkaliverbindungen von der allgemeinen Formel (III) wird anschließend an die Diazotierung bei Temperaturen von -78°C bis +150°C durchgeführt, bevorzugt bei -20°C bis +75°C. Vorzugsweise finden Diethylether oder Tetrahydrofuran Verwendung. Es können aber auch andere gängige Lösungsmittel wie Toluol, Hexan, Acetonitril verwendet werden.

Die Herstellung von Diazoniumsalzen wird von a) Zollinger, H. in Chemie der Azofarbstoffe, 1958, Birckhäuser Verlag, b) von Hashida, Y.; Landells, R.G.M.; Lewis, G.E.; Szele, I; Zollinger, H. in *J Am. Chem. Soc.* **1978**, *100,* 2816*,* c) von Laali, K.; Szele, I.; Zollinger, H. in *Helv. Chim. Acta* **1983**, *66,* 1737 und d) im Hoben Weyl, Methoden in der Organischen Chemie, Band X/3 S.220 beschrieben und ist dem Fachmann allgemein bekannt.

Bei der Diazotierung werden aromatischen Amine in Gegenwart von Lewis- oder Brönstedsäure und Nitrosierungsmitteln wie organischen oder anorganischen Nitriten umgesetzt. Als Lewissäure haben sich BF₃, als Brönstedsäuren HBF₄, Schwefelsäure, HCl, HF bewährt. Die Reaktionsdauer beträgt 1 bis 48 Stunden, bevorzugt 1 bis 15 Stunden. Als Solventien haben sich für anorganische Nitrite sowohl starke Säuren als auch protische polare Lösungsmittel wie Wasser, Methanol oder Mischungen daraus als bevorzugt erwiesen. Hingegen ist bei Verwendung von organischen Nitriten, wie *iso-*Amylnitrit die Verwendung von aprotischen polaren Lösemitteln, wie Tetrahydrofuran oder Estern besonders aber Methylenchlorid vorzuziehen. Dabei lassen sich die Diazoniumsalze mit schwachkoordinierenden Anionen, wie BF₄⁻, als schwerlösliche Feststoffe isolieren.

Die Diazoniumsalze werden anschließend mit aktivierten Aromaten wie Phenolen, Thiophenolen, mono arylierten oder alkylierten Phenylphosphanen, mono arylierten oder alkylierten Anilinen, Benzoesäure oder Benzoesäureesterderivaten oder aromatischen Aminen zur Reaktion gebracht. Dabei werden im Fall von Phenolen zunächst die entsprechenden Alkaliphenolate hergestellt und die Reaktion im schwach sauren bis alkalischen pH Bereich, bevorzugt im pH-Bereich 14 bis 6. durchgeführt. Im Anschluss daran wird die gebildete Azoverbindung durch gängige Methoden wie Filtration oder Phasentrennung gereinigt. Eine weitergehende Reinigung erfolgt durch Säulenchromatographie oder Kristallisation mittels geeigneter Lösemittel.

Damit die erfindungsgemäßen Verbindungen der allgemeinen Formeln (I) zur Polymerisation als Katalysatoren eingesetzt werden können, können sie mit Cokatalysatoren umgesetzt werden. Geeignete Cokatalysatoren sind ausgewählte aus der Gruppe bestehend aus Aluminium- und/oder Bor-Verbindungen mit elektronenziehenden Resten. Bevorzugt werden Bortrifluorid, Trispentafluorphenylboran, Trispentafluorphenylaluminium, *N,N* Dimethylanilinium-tetrakispentafluorphenylborat, Tri-n-butylammonium-tetrakis-pentafluorphenylborat, *N,N* Dimethylanilinium-tetrakis-(3,5-bisperfluormethyl)-phenylborat, Tri-n-butylammonium-tetrakis-(3,5-bisperfluormethyl)-phenylborat, sowie Tritylium-tetrakispentafluorphenylborat. Besonders bevorzugt sind N,N-Dimethylanilinium-tetrakis-pentafluorphenylborat, Tritylium-tetrakispentafluorphenylborat und Trispentafluorphenylboran.

Verwendet man Bor- oder Aluminiumverbindungen als Cokatalysatoren für die erfindungsgemäßen Verbindungen der allgemeinen Formel (I), so setzt man sie im Allgemeinen in einem molaren Verhältnis von 1:10 bis 10:1, bezogen auf M', ein; bevorzugt 1:2 bis 5:1 und besonders bevorzugt 1:1,5 bis 1,5:1.

Eine andere geeignete Klasse von Cokatalysatoren sind Aluminoxane.

Die Struktur der Aluminoxane ist nicht genau bekannt. Wie in DE-A 3 007 725 beschrieben, handelt es sich bei ihnen um Produkte, die durch vorsichtige partielle Hydrolyse von Aluminiumalkylen erhalten werden. Diese Produkte liegen nicht rein vor, sondern als Gemische von offenkettigen und cyclischen Strukturen des Typs (V a) und (V b). Diese Gemische liegen vermutlich in einem dynamischen Gleichgewicht zueinander vor.

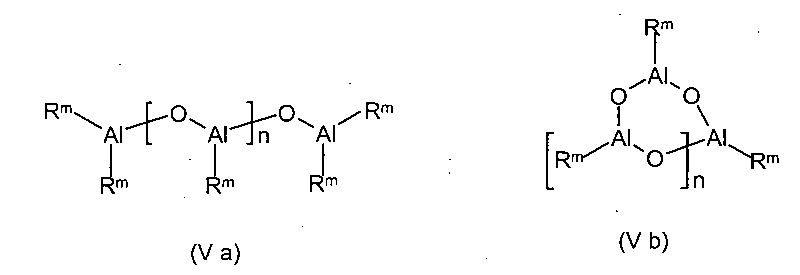

In Formel (V a) und (V b) sind die Reste R^{m} unabhängig voneinander ausgewählt aus der Gruppe bestehend aus substituierten oder unsubstituierten C₁-C₁₂-Alkyl-, substituierten oder unsubstituierten C₃-C₁₂-Cycloalkyl, substituierten oder unsubstituierten C₇-C₂₀-Aralkyl, substituierten oder unsubstituierten C₆-C₁₄-Arylgruppen.

Unter den C₁-C₁₂-Alkylgruppen sind, alle Alkylgruppen mit dieser C-Atomanzahl in der Hauptkette zu verstehen.

Bevorzugt C₁-C₁₂-Alkylgruppen sind Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl und n-Dodecyl. Besonders bevorzugt sind C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl. Ganz besonders bevorzugt ist Methyl.

Unter den C₃-C₁₂-Cycloalkylgruppen sind alle Cycloalkylgruppen mit dieser C-Atomanzahl im Ring zu verstehen.

Bevorzugte C₃-C₁₂-Cycloalkyl sind Cyclopropyl, Cyclobutyl, Cyclopentyl, Cyclohexyl, Cycloheptyl, Cyclooctyl, Cyclononyl, Cyclodecyl, Cycloundecyl und Cyclododecyl. Besonders bevorzugt sind Cyclopentyl, Cyclohexyl und Cycloheptyl.

Unter den C₇-C₂₀-Aralkylgruppen sind alle Aralkylgruppen mit dieser C-Atomanzahl im Grundgerüst zu verstehen.

Bevorzugt sind C₇- bis C₂₀-Aralkyl, besonders bevorzugt sind C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl. Ganz besonders bevorzugt ist Benzyl.

Unter den C₆-C₁₄-Arylgruppen sind alle Arylgruppen mit dieser C-Atomanzahl im Ring zu verstehen. Bevorzugt sind C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl. Besonders bevorzugt sind Phenyl, 1-Naphthyl und 2-Naphthyl. Ganz besonders bevorzugt ist Phenyl.

Der Parameter n steht in der Formel (V a) und (V b) für eine ganze Zahl von 0 bis 40, bevorzugt von 1 bis 25 und besonders bevorzugt von 2 bis 22.

In Organometallics 1996, 15, 2213-26 werden von Y. Koide, S.G. Bott, A.R. Barron auch käfigartige Strukturen für die Aluminoxane diskutiert. Auch A.R. Barron berichtet in Macromol. Symp. 1995, 97, 15-25 über solche Strukturen. Sowohl die käfigartigen Strukturen als auch die Strukturen der Formeln (V a) und (V b) sind sie als Cokatalysatoren für die erfindungsgemäßen Verbindungen der allgemeinen Formel (I) geeignet.

Gemische verschiedener Aluminoxane sind in den Fällen besonders bevorzugte Cokatalysatoren, in denen in einer Lösung eines Paraffins wie n-Heptan oder Isododekan, polymerisiert wird. Ein besonders bevorzugtes Gemisch ist das kommerziell bei der Firma Witco GmbH erhältliche CoMAO mit einer Formel von

[(CH₃)_{0,9}(iso-C₄H₉)_{0,1}AlO]ₘ.

wobei m zwischen 6 und 25 liegt.

Um die erfindungsgemäßen Verbindungen der allgemeinen Formel (I) mit Aluminoxanen umzusetzen, ist im Allgemeinen ein Überschuss von Aluminoxan, bezogen auf M¹, notwendig. Sinnvolle Molverhältnisse M¹:AI liegen im Bereich von 1:10 bis 1:10 000, bevorzugt 1:50 bis 1:1000 und besonders bevorzugt 1:100 bis 1:500.

Cokatalysatoren für Verbindungen der allgemeinen Formel (I) abstrahieren nach gängiger Vorstellung einen Liganden L¹ oder L². Bei dem Cokatalysator kann es sich anstatt um Aluminiumalkylverbindungen der allgemeinen Formel (V a) und (V b) oder den vorstehend beschriebenen Aluminium- oder Bor-Verbindungen mit elektronenziehenden Resten auch um Olefinkomplexe des Rhodiums oder Nickels handeln.

Bevorzugte Ni-(Olefin)-Komplexe, die kommerziell bei Aldrich erhältliche sind, besitzen folgende allgemeine Struktur: Nickel-(Olefin)y-Komplexe mit y = 1, 2, 3 oder 4. Besonders bevorzugt sind Ni(C₂H₄)₃, Ni(1,5-Cyclooctadien)₂ (Ni(COD)₂), Ni(1,6-Cyclodecadien)₂, oder Ni(1,5,9-all-trans-Cyclododecatrien)₂. Ganz besonders bevorzugt ist Ni(COD)₂.

Besonders geeignete Rhodium-(Olefin)-Komplexe sind gemischte Ethylen/1,3-Dicarbonylkomplexe des Rhodiums wie Rhodium-Acetylacetonat-Ethylen Rh (acac) (CH₂=CH₂)₂, Rhodium-Benzoylacetonat-Ethylen Rh (C₆H₅-CO-CH-CO-CH₃) (CH₂=CH₂)₂, oder Rh (C₆H₅-CO-CH-CO-C₆H₅) (CH₂=CH₂)₂. Besonders bevorzugt ist Rh (acac) (CH₂=CH₂)₂. Diese Verbindung lässt sich nach den Angaben von R. Cramer aus Inorg. Synth. 1974, 15, 14 synthetisieren.

Bei einige Verbindungen der allgemeinen Formel (I) kann auch eine Umsetzung direkt mit Ethylen durchgeführt werden. Die Leichtigkeit der Startreaktion hängt entscheidend von der Natur des Liganden L¹ ab. Derartig labilkoordinierende Liganden L¹ sind vorzugsweise Verbindungen die über eine olefinische Gruppe verfügen und dadurch das Metall komplexieren. Weiterhin eignen sich insbesondere auch Nitrile und Verbindungen mit Etherfunktionen.

Die gewählte Verbindung der allgemeinen Formeln (I) und der Cokatalysator bilden zusammen ein Reaktionsprodukt, das als Katalysatorsystem in der Polymerisation aktiv ist.

Durch Zugabe von weiterem Aluminiumalkyl der allgemeinen Formal Al(R^{m})₃ oder Aluminoxanen kann die Aktivität des erfindungsgemäßen Katalysatorsystems erhöht werden, insbesondere dann, wenn Verbindungen der allgemeinen Formel (V a) und (V b) oder die vorstehend genannten Aluminium- oder Bor-Verbindungen mit elektronenziehenden Resten als Cokatalysatoren verwendet werden; Aluminiumalkyle der allgemeinen Formel Al(R^{m})₃ oder Aluminoxane können auch als Molmassenregler wirken. Ein weiterer effektiver Molmassenregler ist Wasserstoff. Besonders gut kann man die Molmasse durch die Reaktionstemperatur und den Druck regeln. Für den Fall, dass die Verwendung einer Bor-Verbindung wie oben beschrieben gewünscht ist, ist die Zugabe eines Aluminiumalkyls der allgemeinen Formel Al(R^{m})₃ besonders bevorzugt.

Es wurde gefunden, dass die erfindungsgemäßen Verbindungen der allgemeinen Formel (I) geeignet sind, um Olefine in Gegenwart polarer Zusätze wie Estern, Ethem und Nitrilen zu polymerisieren. Besonders gut polymerisieren und copolymerisieren sie Ethen.

Druck- und Temperaturbedingungen während der Polymerisation können in weiten Grenzen gewählt werden. Als Druck hat sich ein Bereich von 0,5 bar bis 4000 bar als bevorzugt erwiesen, besonders bevorzugt sind 10 bis 75 bar oder Hochdruckbedingungen von 500 bis 2500 bar. Als Temperatur hat sich ein Bereich von 0 bis 120°C als bevorzugt erwiesen, besonders bevorzugt sind 40 bis 100°C und ganz besonders bevorzugt 50 bis 85°C.

Als Monomer sind die folgenden Olefine zu nennen: Ethylen, Propylen, 1-Buten, 1-Penten, 1-Hexen, 1-Octen, 1-Decen oder 1-Undecen, wobei Propylen und Ethylen bevorzugt und Ethylen besonders bevorzugt ist.

Als Comonomere sind α-Olefine, Styrol, Isobuten, Cyclopenten, Cyclohexen, Norbornen und Norbornadien geeignet. Bevorzugt sind 1-Buten, 1-Penten, 1-Hexen, 4-Methyl-1-Penten, 1-Octen, 1-Decen oder 1-Undecen. Die α-Olefine werden in Mengen von 0,1 bis 20 mol-% bezogen auf das erhaltende Polymer eingesetzt. Bevorzugt sind α-Olefinemengen im Bereich von 0,5 bis10 mol-%.

Als Lösemittel werden Hexan, Heptan, Toluol, ortho-Xylol, meta-Xylol, para-Xylol, Ethylbenzol sowie Mischungen derselben, Diethylether, Tetrahydrofuran, Chlorbenzol, 1,3-Dichlorbenzol, Dichlormethan und - bei Hochdruckbedingungen - überkritisches Ethylen verwendet. Bevorzugt sind Hexan, Toluol, Chlorbenzol und Dichlomethan.

Die erfindungsgemäßen Verbindungen der allgemeinen Formel (I) lassen sich bei der Polymerisation mit Wasserstoff regeln, d.h. durch Zugabe von Wasserstoff lässt sich das Molekulargewicht der durch das Katalysatorsystem erhältlichen Polymere senken. Bei genügend Wasserstoffzugabe werden Wachse erhalten, wobei die erforderliche Wasserstoffkonzentration auch von der Art der verwendeten Polymerisationsanlage abhängt.

Die erfindungsgemäßen Katalysatoren können auch gemeinsam mit einem oder mehreren anderen, an sich bekannten Polymerisationskatalysatoren verwendet werden. So können sie zusammen mit
- Ziegler-Natta-Katalysatoren,
- geträgerten Metallocenkatalysatoren der Übergangsmetalle der Gruppen 4. bis 6. Nebengruppe des Periodensystems der Elemente,
- Katalysatoren der späten Übergangsmetalle wie in WO 96/23010 beschrieben,
- Fe- oder Co-Komplexen mit Pyridyldiiminliganden, wie sie in WO 98/27124 offenbart werden,
- oder auch Chromoxidkatalysatoren nach Phillips eingesetzt werden.
   Dabei ist es einerseits möglich, verschiedene Katalysatoren miteinander zu mischen und gemeinsam zu dosieren oder cogeträgerte Komplexe auf einem gemeinsamen Träger zu verwenden oder auch verschiedene Katalysatoren getrennt an derselben oder an verschiedenen Stellen in das Polymerisationsgefäß zu dosieren.
   Ein weiterer Gegenstand der Erfindung ist, dass sich die erfindungsgemäßen Verbindungen der allgemeinen Formel (I), insbesondere solche mit M¹ = Ni, in besonderer Weise zur Polymerisation oder Copolymerisation von 1-Olefinen, bevorzugt Ethylen, in Emulsionspolymerisationsverfahren eignen.
   Neben anderen 1-Olefinen als Comonomeren, wie Propen, 1-Buten, 1-Hexen, 1-Octen oder 1-Decen, lassen sich mit Hilfe des Katalysatorsystems auch polare Comonomere einbauen, wobei 0,1 bis 50 mol-% Comonomer bevorzugt verwendet werden können. Als polare Comonomere sind bevorzugt
- Acrylate wie Acrylsäure, Acrylsäuremethylester, Acrylsäureethylester, Acrylsäure-(2-ethyl)-hexylester, Acrylsäure-n-butylester oder Acrylsäure-tert.-butylester;
- Acrylnitril
- Methacrylsäure, Methacrylsäuremethylester, Methacrylsäureethylester, Methacrylsäure-nbutylester oder Methacrylsäure-tert.-butylester;
- Vinylcarboxylate, wobei Vinylacetat besonders bevorzugt ist,
- ungesättigte Dicarbonsäuren, besonders bevorzugt ist Maleinsäure,
- ungesättigte Dicarbonsäurederivate, besonders bevorzugt sind Maleinsäureanhydrid und Maleinsäurealkylimide wie Maleinsäuremethylimid.

Weiterhin lassen sich Terpolymere mit mindestens 2 der oben aufgeführten polaren Monomeren oder einer Mischung von polarem und unpolarem Monomer jeweils im Molbereich zwischen 0,1 und 99,8 mol-% und Ethylen herstellen.

Das mit Hilfe der erfindungsgemäßen Verbindung hergestellte Polymer lässt sich durch die dem Fachmann bekannten Möglichkeiten wie spritzgießen, extrudieren, schäumen zu weiteren Formartikeln verarbeiten.

### Beispiele

Die folgenden Arbeitsbeispiele erläutern die Erfindung.

### Allgemeine Vorbemerkungen:

Alle Arbeiten wurden mittels Schlenkrohrtechnik unter Ausschluss von Luft und Feuchtigkeit in einer gereinigten Argonatmosphäre durchgeführt. Die Apparaturen wurden vor Benutzung im Ölpumpenvakuum ausgeheizt und mit gereinigtem Argon gespült. Die Befüllung der NMR-Röhrchen erfolgte ebenfalls unter Argon.

Alle Lösungsmittel, die zur Reaktionsführung verwendet wurden, inklusive derjenigen, welche zur säulenchromatographischen Reinigung dienten, waren wasser- und luftsauerstofffrei. Zur dünnschichtchromatographischen Untersuchung von Reaktionsverläufen dienten Dünnschichtplatten der Firma Machery-Nagel mit Kieselgel- (Polygram® SIL G/UV₂₅₄) bzw. Aluminiumoxid-Beschichtung (Polygram® ALOX N/UV₂₅₄). Zur Säulenchromatographie fanden folgende Sorbentien Verwendung:
- Kieselgel 60, Korngröße 40 - 60 µm, 230 - 400 mesh (ASTM) (Fa. Baker)
- Kieselgur, gereinigt, geglüht, Erg. B. 6 (Fa. Riedel-de Haën).

NMR-Spektren wurden in deuterierten Lösungsmitteln bei 293 K aufgenommen. Die chemische Verschiebung wird in ppm (parts per million) angegeben.

^{**1**}**H-NMR**: Standard intern durch Lösungsmittel, CDCl₃ δ = 7.26; C₆D₆ δ = 7.16; rel. SiMe₄ (mit SiMe₄ δ = 0).

^{**13**}**C{**^{**1**}**H}-NMR:** Standard intern durch Lösungsmittel, CDCl₃. δ = 77.0; C₆D₆ δ = 128.0; rel. SiMe₄ (mit SiMe₄ δ = 0).

^{**31**}**P{**^{**1**}**H}-NMR:** Standard extern durch 85% wässrige ortho-Phosphorsäure

Darstellung der erfindungsgemäßen Liganden:

### Allgemeine Arbeitsvorschrift zur Diazotierung (Beispiele 1.1 bis 1.4)

Zu 2,4,6-Trimethylanilin (72,4 mmol) wird unter Rühren bei 0°C langsam HBF₄ (Mischung aus 48 % Säure 40 ml, 64 mmol und 40 ml Wasser) gegeben, wobei eine weiße Suspension entsteht. Dazu wird eine Lösung von Natriumnitrit in Wasser (5.0 g, 71.4 mmol in 10 ml Wasser) tropfenweise unter Rühren eingetragen. Dabei färbt sich die Reaktionslösung gelb. Die erhaltene Suspension wird für weitere 5 min gerührt und bei 0°C in eine Lösung des Phenols in 2N NaOH portionsweise gegeben (Phenol (71.4 mmol) in wenig Ethanol lösen und mit 500 ml einer 2N NaOH mischen). Nach 10 min wird eine rote ölige Schicht erhalten, die sich nach weiterem Rühren verfestigt. Nach Filtration wird der Feststoff aus wenig Ethanol kristallisiert und man erhält das Na-Salz des Azofarbstoffs.

Das Na-Salz wird in möglichst wenig Diethylether gelöst und mit verdünnter HCl innig durchmischt. Nach Trennung der Phasen wird die organische Phase mit Na₂SO₄ getrocknet und schließlich nach Filtration alle flüchtigen Bestandteile im Vakuum entfernt.

Zur Diazotierung mit 2,6-Diisopropylanilin wurde typischerweise wie folgt vorgegangen:

Die Liganden werden durch eine Kupplungsreaktion des Diazoniumsalzes mit den entsprechenden Phenolen erhalten. Das Diazoniumsalz wird durch Reaktion des 2,6-Diisopropylanilins (20 mmol) mit Isoamylnitrit (2,9 g, 3,4 ml, 25 mmol) und BF₃*OEt₂ (3,1 g; 2,8 ml; 22 mmol) in Methylenchlorid (200 ml) bei -10°C innerhalb von 60 min hergestellt. Nach Filtration des Diazoniumsalzes (Wasserstrahlvakuum) in der Kälte wird dieses bei -20°C in THF (50 ml) suspendiert und in eine Lösung von Phenol (20 mmol) (Phenol in möglichst wenig Ethanol lösen und NaOH (10 g, 250 mmol) in 100 ml Wasser zufügen) bei -20°C eingetragen (1 h Rühren). Dann wird die Reaktionslösung unter gutem Rühren auf 25°C erwärmt und weiter 15 h gerührt. Zur Aufarbeitung wird mit Hexan versetzt, mit verdünnter HCl innig vermischt, anschließend mit Wasser bis zu pH 7 gewaschen und die wässrige Phase abgetrennt. Nach Trocknung der organischen Phase über Na₂SO₄ wird der Farbstoff über Kieselgel mit Hexan/Methylenchlorid 3/1 chromatographiert. Ein gereinigtes Produkt kann durch Kristallisation aus Methanol bei -20° erhalten werden.

### Überführung der sauren Azofarbstoffe in die entsprechenden Li-Salze (Beispiele 2.1 bis 2.4)

Der Azofarbstoff (14.2 mmol) wird in 150 ml Tetrahydrofuran gelöst und auf -78°C gekühlt. Vorzugsweise kann auch Diethylether verwendet werden, wenn der Azofarbstoff ausreichend löslich ist. Dann wird n-BuLi (2.7 m in Heptan; 5.8 ml, 15.6 mmol) zugetropft und die Reaktionsmischung bei -78°C für 1 h gerührt. Nach Erwärmen auf 25°C wird das Lösungsmittel entfernt und 60 ml n-Hexan zugegeben. Das gereinigte Produkt wird durch Kristallisation bei - 20°C erhalten und kann direkt weiterverarbeitet werden.

### Darstellung der Diazoenolat-Ni-Komplexe (Beispiele 3.1 bis 3.4)

Das Li-Salz der Azoverbindung (3.0 mmol) wird in 10 ml Benzol bei 25°C gelöst und dazu eine Lösung von (PPh₃)₂Ni(Ph)Cl in 20 ml Benzol transferiert. Die Darstellung von (PPh₃)₂Ni(Ph)Cl erfolgt nach einer Vorschrift von Hidai, M.; Kashiwagi, T.; Ikeuchi, T., Uchida, Y. beschrieben in J. Organomet. Chem. **1971**, 30, 279. Die anfangs grünbraune Reaktionsmischung färbt sich nach 15 h Rühren braun-rot. Anschließend wird die Lösung von ausgefallenem LiCl filtriert und alle flüchtigen Bestandteile im Vakuum entfernt. Der Rückstand wird in 10 ml n-Hexan aufgenommen und bei -20°C kristallisiert.

### Darstellung der Diazoenolat-Pd-Komplexe (Beispiele 4.1 bis 4.4)

Das Li-Salz der Azoverbindung (1.5 mmol) wird in 10 ml Methylenchlorid bei 25°C aufgenommen und die Lösung auf 0°C gekühlt. Parallel wird (COD)Pd(Me)Cl (1.5 mmol) in 2 ml CH₂Cl₂ gelöst und in eine konzentrierte Lösung von Triphenylphosphin (3 mmol in 3 ml CH₂Cl₂) bei 0°C eingetragen, wobei eine grauweiße Suspension entsteht. Die Darstellung von (COD)Pd(Me)Cl erfolgt nach einer Vorschrift von Rülke, R.E.; Ernsting, J.M.; Spek, A.L.; Elsevier, C.J.; van Leewen, P.W.M.N.; Vrieze, K beschriben in Inorg. Chem. 1993, *32*, 5769.

Diese Reaktionsmischung wird zum Li-Salz der Azoverbindung bei 0°C transferiert und 15 h bei 25°C gerührt. Dabei wird eine rote Suspension erhalten. Nach Entfernung alle flüchtigen Bestandteile wird mit 10 ml Toluol versetzt und von unlöslichen Bestandteilen filtriert. Anschließend entfernt man das Lösungsmittel und kristallisiert aus 10 ml Hexan bei -20°C.

Der Li-Salz der Azoverbindung (1.5 mmol) wird in Methylenchlorid (10 ml) aufgenommen und Pyridin (3.0 mmol) zugegeben. Anschließend wird (COD)Pd(Me)Cl (1.5 mmol) in Methylenchlorid (5 ml) bei 0°C eingetragen. Die Reaktionslösung wird 15 h bei 25°C gerührt. Nach Entfernung alle flüchtigen Bestandteile wird in Toluol gelöst und von unlöslichen Bestandteilen filtriert. Man destilliert das Lösungsmittel ab und versetzt mit Hexan. Kristallisation bei -20 bis -78°C.

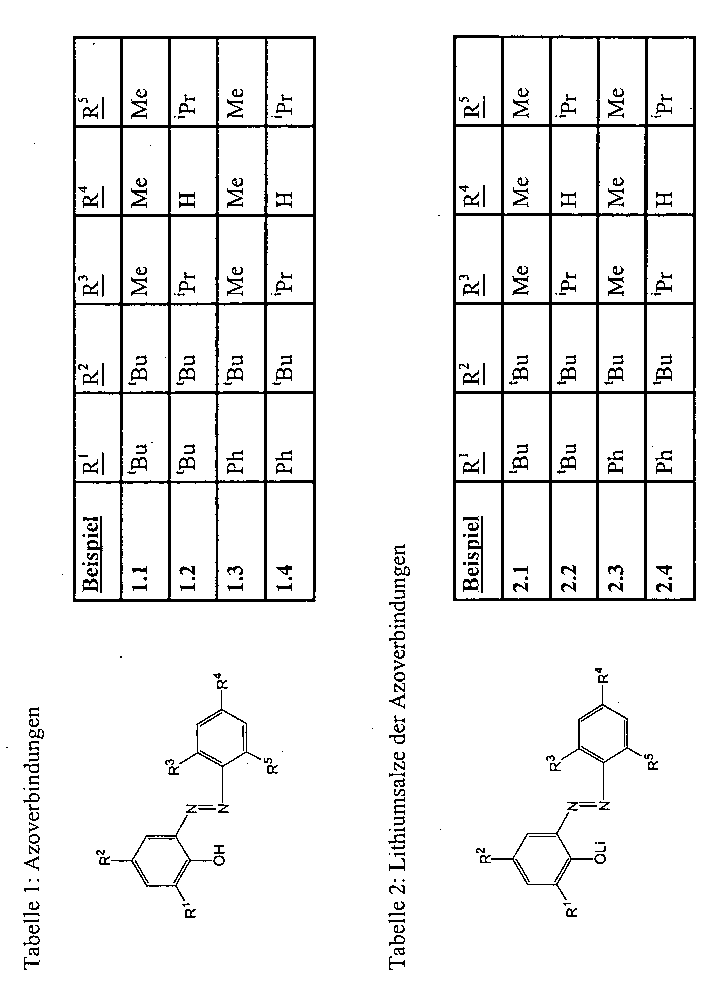

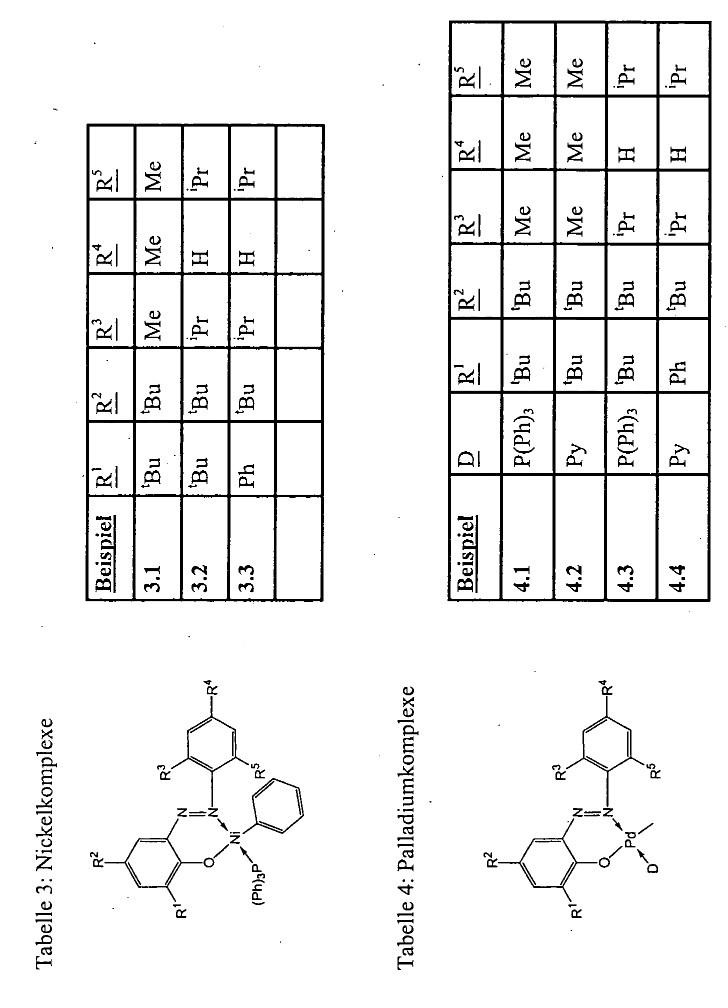

### Analytische Daten zu den Verbindungen 1.1 bis 1.4 und 3.1 bis 4.2:

### Azoverbindungen:

### Beispiel 1.1:

**Anal.** Ber. für C₂₃H₃₂N₂O (352,51): C, 78,36; H, 9,15; N, 7,95; Gef.: C, 78,2; H, 9,1; N, 7,9. **Smp.**: 89°C. ^{**1**}**H-NMR** in CDCl₃, [δ]: 1,30 (s, 9 H, CH₃, t-Bu), 1,41 (s, 9 H, CH₃, t-Bu), 2,26 (s, 3 H, CH₃), 2,35 (s, 6 H, CH₃), 6,89 (s, 2 H, CH, Ar), 7,37 (d, 1 H, ⁴J_{HH} = 2,4 Hz, CH, Ar), 7,69 (d, 1 H, ⁴J_{HH} = 2,4 Hz, CH, Ar), 13,5 (1 H, OH). ¹³C{¹H}-NMR in CDCl₃, [δ]: 19,7 (CH₃), 21,1 (CH₃), 29,5 (CH₃, t-Bu), 31,3 (CH₃, t-Bu), 34,3 (C, t-Bu), 35,3 (C, t-Bu). 127,2 (CH, Ar), 127,9 (CH, Ar), 130,3 (CH, Ar), 131,6 (CH, Ar), 137,0 (C, Ar), 137,9 (C, Ar), 138,7 (C, Ar), 141,2 (C, Ar), 146,3 (C, Ar), 149,9 (C, Ar). **IR**: 1360 (m, δ _{(N=N)}), (kein OH).

### Beispiel 1.2:

**Anal.** Ber. für C₂₆H₃₈N₂O (394,59): C, 79,14; H, 9,71; N, 7,10; Gef.: C, 79,0; H, 10,4; N, 6,9. **Smp.**: 82°C. ^{**1**}**H-NMR** in CDCl₃, [δ]: 1,20 (d, 12 H, ³J_{HH} = 7,8 Hz, CH₃; i-Pr), 1,37 (s, 9 H, CH₃, t-Bu), 1,49 (s, 9 H, CH₃, t-Bu), 3,05 (sp, 2 H, ³J_{HH} = 7,8 Hz, CH; i-Pr); 7,25-7,32 (m, 3 H, CH, Ar), 7,50 (s, 1 H, CH, Ar), 7,80 (s, 1 H, CH, Ar), 13,2 (1 H, OH). ^{**13**}**C{**^{**1**}**H}-NMR** in CDCl₃, [δ]: 23,7 (CH₃, i-Pr), 27,9 (CH, i-Pr), 29,5 (CH₃, t-Bu), 31,4 (CH₃, t-Bu), 34,3 (C, t-Bu), 35,4 (C, t-Bu), 123,7 (CH, Ar), 127,7 (CH, Ar), 128,2 (CH, Ar), 128,6 (CH, Ar), 136,9 (C, Ar), 137,9 (C, Ar), 140,2 (C, Ar), 141,3 (C, Ar), 148,5 (C, Ar), 149,8 (C, Ar).

### Beispiel 1.3:

**Anal.** Ber. für C₂₅H₂₈N₂O (372,50) C, 80,61; H, 7,58; N, 7,52; Gef.: C, 78,9; H, 7,7; N, 7,2. **Smp.:** 111°C. ^{**1**}**H-NMR** in CDCl₃, [δ]: 1,34 (s, 9 H, CH₃, t-Bu), 2,26 (s, 3 H, CH₃), 2,36 (s, .6 H, CH₃), 6,90 (s, 2 H, CH, Ar), 7,29 (t, 1 H, CH, Ar), 7,39 (t, 2 H, CH, Ar), 7,41 (s, 1 H, CH, Ar), 7,57 (d, 2 H, CH, Ar), 7,86 (s, 1 H, CH, Ar), 13,3 (1 H, OH). ^{**13**}**C {**^{**1**}**H)-NMR** in CDCl₃, [δ]: 19,8 (CH₃), 21,1 (CH₃), 31,4 (CH₃, t-Bu), 34,2 (C, t-Bu), 127,3 (CH, Ar), 128,2 (CH, Ar), 128,9 (CH, Ar), 129,5 (CH, Ar), 130,4 (CH, Ar), 131,7 (CH, Ar), 131,9 (CH, Ar), 137,2 (C, Ar), 137,8 (C, Ar), 139,2 (C, Ar), 142,4 (C, Ar), 146,2 (C, Ar), 147,5 (C, Ar). **IR:** 1373 (m, δ _{(N=N)}), (kein OH).

### Beispiel 1.4:

**Anal.** Ber. für C₂₈H₃₄N₂O (414,58): C, 81,12; H, 8,27; N, 6,76; Gef.: C, 80,8; H, 8,4; N, 6,7. **Smp.**: 106°C. ^{**1**}**H-NMR** in CDCl₃, [δ]: 1,20 (d, 12 H, ³J_{HH} = 6,9 Hz, CH₃; i-Pr), 1,42 (s, 9 H, CH₃, t-Bu), 3,07 (sp, 2 H, ³J_{HH} = 6,9 Hz, CH; i-Pr); 7,28 (d, 2 H, CH, Ar), 7,32 (t, 1 H, CH, Ar), 7,39 (t, 1 H, CH, Ar), 7,48 (t, 2 H, CH, Ar), 7,55 (s, 1 H, CH, Ar), 7,66 (d, 2 H, CH, Ar), 7,98 (s, 1 H, CH, Ar), 13,0 (1 H, OH). ^{**13**}**C{**^{**1**}**H}-NMR** in CDCl₃, [δ]: 23,7 (CH₃, i-Pr), 27,9 (CH, i-Pr), 31,4 (CH₃, t-Bu), 34,2 (C, t-Bu), 123,7 (CH, Ar), 127,4 (CH, Ar), 128,3 (CH, Ar), 128,4 (CH, Ar), 129,3 (CH, Ar), 129,5 (CH, Ar), 130,5 (CH, Ar), 132,4 (CH, Ar), 136,9 (C, Ar), 137,5 (C, Ar), 140,2 (C, Ar), 142,6 (C, Ar), 147,5 (C, Ar), 148,5 (C, Ar). **IR:** 1362 (m, δ_{(N=N)}), (kein OH).

### Nickelkomplexe:

### Beispiel 3.1:

**Anal.** Ber. für C₄₇H₅₁N₂NiOP (749,59) C, 75,31; H, 6,86; N, 3,74; Ni, 7,83; O, 2,13; P, 4,13 Gef.: C, 75,5; H, 6,8; N, 2,7; P, 3,6. **Smp.:** 116°C. ^{**1**}**H-NMR** in CDCl₃, [δ] 0,58 (s, 9 H, CH₃, t-Bu), 0,70 (s, 9 H, CH₃, t-Bu), 1,99 (s, 3 H, CH₃), 2,27 (s, 6 H, CH₃), 5,95 (t, 2 H, CH, Ar), 6,13 (t, 1 H, CH, Ar), 6,41 (s, 2 H, CH, Ar), 6,64 (d, 2 H, CH, Ar), 7,1-7,7 (m, 22 H, CH, Ar). ^{**13**}**C{**^{**1**}**H}-NMR** in CDCl₃, [δ]: 19,2 (CH₃), 21,0 (CH₃), 29,9 (CH₃, t-Bu), 31,6 (CH₃, t-Bu), 34,4 (C, t-Bu), 35,3 (C, t-Bu), 121,4 (CH, Ar), 124,8 (CH, Ar), 127,2 (CH, Ar), 128,3 (CH, Ar), 128,4 (CH, Ar), 128,9 (CH, Ar), 129,6 (CH, Ar), 130,2 (CH, Ar), 131,8 (CH, Ar), 132,3 (CH, Ar), 132,5 (CH, Ar), 134,3 (C, Ar), 133,5 (C, Ar), 135,1 (CH, Ar), 136,8 (C, Ar), 137,3 (CH, Ar), 140,5 (C, Ar), 142,6 (C, Ar), 146,0 (C, Ar), 146,6 (C, Ar), 151,9 (C, Ar), 152,5 (C, Ar). ^{**31**}**P-NMR** in C₆D₆, [δ]:,26,1 (PPh₃). MS **(FD)**[%]: 748 [54, M⁺], 278 [76], 262 [100].

### Beispiel 3.2:

^{**1**}**H-NMR** in C₆D₆, [δ]: 1,09 (s, 9 H, CH₃, t-Bu), 1,35 (d, 6 H, ³J_{HH} = 6,7 Hz, CH₃, i-Pr), 1,43 (s, 9 H, CH₃, t-Bu), 4,50 (sp, 2 H, ³J_{HH} = 6,7 Hz, CH, i-Pr), 6,38 (t, 2 H, CH, Ar), 6,45 (t, 1 H; CH, Ar), 7,3 (m, CH, Ar), 7,7-8,0 (m, CH, Ar). ^{**13**}**C{**^{**1**}**H}-NMR** in C₆D₆, [δ]: 24,9 (CH₃, i-Pr), 27,9 (CH₃, i-Pr), 31,9 (CH, i-Pr), 32,4 (CH₃, t-Bu), 33,6 (CH₃, t-Bu), 36,3 (C, t-Bu), 37,6 (C, t-Bu), 123,5 (CH, Ar), 125,9 (CH, Ar), 129,3 (CH, Ar), 130,0 (CH, Ar), 131,9 (CH, Ar), 132,4 (CH, Ar), 132,5 (CH, Ar), 134,7 (CH, Ar), 134,8 (CH, Ar), 137,3 (CH, Ar), 137,3 (CH, Ar), 139,5 (C, Ar), 140,5 (C, Ar),142,8 (C, Ar), 143,5 (C, Ar), 145,0 (C, Ar), 149,5 (C, Ar), 149,0 (C, Ar), 154,4 (C, Ar). ³¹**P-NMR** in C₆D₆, [δ] 25,1 (PPh₃). **MS (FD)**[%]: 790 [100, M⁺].

### Beispiel 3.3:

^{**1**}**H-NMR** in CDCl₃, [δ]:1,32 (d, 6 H, ³J_{HH} = 6,7 Hz, CH₃, i-Pr), 1,34 (s, 9 H, CH₃, t-Bu), 4,18 (sp, 2 H, ³J_{HH} = 6,7 Hz, CH, i-Pr), 6,35 (t, 2 H, CH, Ar), 6,44 (t, 1 H, CH, Ar), 6,83 (t, 2 H, CH, Ar), 6,87 (t, 1 H, CH, Ar), 6,9-7,2 (m, 15 H, CH, Ar), 7,47 (t, 4 H, J = 5,7 Hz, CH, Ar), 7,57 (t, 4 H, J = 9,0 Hz, CH, Ar), 7,69 (d, 1 H, J = 2,8 Hz, CH, Ar), 7,83 (dd, 2 H, CH, Ar), 8,05 (d, 1 H, J = 5,7 Hz, CH, Ar). ^{**13**}**C{**^{**1**}**H}-NMR** in C₆D₆, [δ]: 22,5 (CH₃, i-Pr), 25,5 (CH₃, i-Pr), 29,4 (CH, i-Pr), 31,2 (CH₃, t-Bu), 34,9 (C, t-Bu), 121,6 (CH, Ar), 122,7 (CH, Ar), 125,5 (CH, Ar), 125,9 (CH, Ar), 127,0 (CH, Ar), 127,6 (CH, Ar), 127,9 (CH, Ar), 128,4 (CH, Ar), 128,5 (CH, Ar), 128,6 (CH, Ar), 129,2 (CH, Ar), 129,8 (CH, Ar), 129,9 (CH, Ar), 131,2 (C, Ar), 131,6 (C, Ar), 134,0 (C, Ar), 134,4 (CH, Ar), 134,5 (CH, Ar), 135,4 (C, Ar), 137,1 (C, Ar), 138,5 (C, Ar), 140,2 (C, Ar), 140,4 (C, Ar), 146,0 (C, Ar), 146,4 (C, Ar), 146,8 (C, Ar), 150,1 (C, Ar), 151,9 (C, Ar). ^{**31**}**P-NMR** in C₆D₆, [δ]: 21,9 (PPh₃). **MS (FD)**[%]: 810 [100, M⁺], 545 [12], 278 [36].

### Palladiumkomplexe:

### Beispiel 4.1:

**Anal.** Ber. für C₄₂H₄₉N₂OPPd (735,25) C, 68,61; H, 6,72; N, 3,81; O, 2,18; P, 4,21; Pd, 14,47 Gef.: C, 68,4; H, 6,8; N, 3,6. **Zers.**: 180°C. ^{**1**}**H-NMR** in i CDCl₃, [δ]: -0,29 (d, 3 H, ³J_{P,H} = 4,2 Hz, CH₃), 0,79 (s, 9 H, CH₃, t-Bu), 1,29 (s, 9 H, CH₃, t-Bu), 2,18 (s, 3 H, CH₃), 2,30 (s, 6 H, CH₃), 6,90 (s, 2 H, CH, Ar), 7,32-7,45 (m, CH, Ar), 7,47 (s, 1H, CH, Ar) 7,65-7,75 (m, CH, Ar). ^{**13**}**C{**^{**1**}**H}-NMR** in CDCl₃, [δ]: 0,3 (CH₃), 18,4 (CH₃), 20,9 (CH₃), 29,3 (CH₃, t-Bu), 31,1 (CH₃, t-Bu), 33,8 (C, t-Bu), 35,1 (C, t-Bu), 128,1 (CH, Ar), 128,2 (CH, Ar), 128,7 (CH, Ar), 130,1 (CH, Ar), 130,2 (CH, Ar), 131,3 (C, Ar), 131,6 (C, Ar), 134,9 (CH, Ar), 135,0 (CH, Ar), 135,6 (C, Ar), 139,0 (C, Ar), 142,2 (C, Ar), 150,0 (C, Ar), 150,1 (C, Ar), 155,7 (C, Ar). ^{**31**}**P-NMR** in CDCl₆, [δ]: 35,5 (PPh₃). **MS (FD)**[%]: 734 [100, M⁺].

### Beispiel 4.2:

**Anal.** Ber. für C₂₉H₃₉N₃OPd (552,06) C, 63,09; H, 7,12; N, 7,61; O, 2,90; Pd, 19,28; Gef.: C, 62,5; H, 7,0; N, 7,6. **Zers.**: 170°C. ^{**1**}**H-NMR** in CDCl₃, [δ]: -0,05 (s, 3 H, CH₃), 1,23 (s, 9 H, CH₃, t-Bu), 1,24 (s, 9 H, CH₃, t-Bu), 2,23 (s, 6 H, CH₃), 2,27 (s, 3 H, CH₃), 6,89 (s, 2 H, CH, Ar), 7,35 (t, 2 H, CH, Py), 7,41 (s, 1 H, CH, Ar), 7,45 (s, 1 H, CH, Ar), 7,80 (t, 1 H, CH, Py), 8,87 (d, 2 H, CH, Py). ^{**13**}**C{**^{**1**}**H}-NMR** in CDCl₃, [δ]: -3,9 (CH₃), 17,0 (CH₃), 19,9 (CH₃), 28,3 (CH₃, t-Bu), 28,4 (CH₃, t-Bu), 32,9 (C, t-Bu), 34,6 (C, t-Bu), 123,4 (CH, Py), 127,6 (CH, Ar), 128,4 (CH, Ar), 128,8 (CH, Py), 129,4 (CH, Ar), 133,9 (C, Ar), 134,6 (C, Ar), 136,3 (CH, Py), 136,4 (C, Ar), 138,4 (C, Ar), 140,1 (C, Ar), 149,7 (C, Ar), 151,5 (CH, Py), 154,6 (C, Ar). **MS (FD)[%]**: 551 [100, M⁺].

### Beispiel 4.3:

**Anal.** Ber. für C₄₅H₅₅N₂OPPd (777,32) C, 69,53; H, 7,13; N, 3,60; O, 2,06; P, 3,98; Pd, 13,69 Gef.: C, 70,6; H, 7,5; N, 3,3; **Smp.**: 199°C. ^{**1**}**H-NMR** in CDCl₃, [δ]: -0,26 (d, 3 H, ³J_{PH} = 4,3 Hz, CH₃), 0,74 (s, 9 H, CH₃, t-Bu), 1,20 (d, 6 H, ³J_{HH} = 6,8 Hz, CH₃, i-Pr), 1,30 (s, 9 H, CH₃, t-Bu), 1,32 (d, 6 H, ³J_{HH} = 6,8 Hz, CH₃, i-Pr), 3,47 (sp, 2 H, ³J_{HH} = 6,8 Hz, CH, i-Pr), 7,20 (s, 1 H, CH), 7,21 (s, 2 H, CH), 7,38 (t, 6 H, CH), 7,42 (dt, 3 H, CH), 7,46 (s, 1 H, CH, Ar), 7,68 (dd, 6 H, CH). ^{**13**}**C{**^{**1**}**H}-NMR** in CDCl₃, [δ]: 2,5 (CH₃), 22,8 (CH₃, i-Pr), 24,6 (CH₃, i-Pr), 27,9 (CH, i-Pr), 29,3 (CH₃, t-Bu), 31,1 (CH₃, t-Bu), 33,8 (C, t-Bu), 35,1 (C, t-Bu), 123,2 (CH, Ar), 126,9 (CH, Ar), 128,2 (CH, Ar), 129,0 (CH, Ar), 130,3 (CH, Ar), 131,3 (C), 131,5 (C), 134,8 (CH, Ar), 134,9 (CH, Ar), 138,7 (C), 140,8 (C), 142,3 (C), 150,2 (C), 155,6 (C). ^{**31**}**P-NMR** in CDCl₆, [δ]: 35,8 (PPh₃). **MS (FD)**[%]: 776 [100, M⁺], 394 [56, M-PdMeP(Ph)₃].

### Beispiel 4.4:

**Anal.** Ber. für C₃₄H₄₁N₃OPd (614,13) C, 66,49; H, 6,73; N, 6,84; O, 2,61; Pd, 17,33, Gef.: C, 65,7; H, 6,6; N, 6,8. **Zers.:** 175°C. ^{**1**}**H-NMR** in CDCl₃, [δ]: -0,0 (s, 3 H, CH₃), 1,04 (d, 6 H, ³J_{HH} = 6,8 Hz, CH₃, i-Pr), 1,24 (s, 9 H, CH₃, t-Bu), 1,25 (d, 6 H, ³J_{HH} = 6,8 Hz, CH₃, i-Pr), 3,39 (sp, 2 H, ³J_{HH} = 6,8 Hz, CH, i-Pr), 7,1 - 7,3 (m, 8 H, CH), 7,49 (s, 2 H, CH), 7,50 (s, 1 H, CH, Ar), 7,53 (s, 1 H, CH, Ar), 7,66 (t, 1 H, CH, Py), 8,53 (d, 2 H, CH, Py).^{**13**}**C{**^{**1**}**H}-NMR** in CDCl_{3;} [δ]: 0,0 (CH₃), 22,6 (CH₃, i-Pr), 24,5 (CH₃, i-Pr), 27,7 (CH, i-Pr), 31,1 (CH₃, t-Bu), 33,7 (C, t-Bu), 123,2 (CH, Ar), 124,1 (CH, Ar), 126,2 (CH, Ar), 127,2 (CH, Ar), 127, 4 (CH, Ar), 129,8 (CH, Ar), 130,9 (CH, Ar), 134,0 (C), 134,5 (CH, Ar), 136,5 (C), 137,5 (CH, Py), 139,2 (C), 140,1 (C), 150,7 (C), 152,2 (CH, Py), 153,8 (C). **MS** (**FD**)[%]: 613 [100, M⁺].

### Polymerisationsbeispiele:

### Allgemeine Arbeitsvorschrift zur Polymerisation

In einem sekurierten 300 ml Stahlautoklaven mit Glaseinsatz wurden Toulol, der Cokatalysator, und der Azokomplex in dieser Reihenfolge mittels einer Kanüle zugegeben. Anschließend wurde die Mischung 0.5 h bei 30°C gerührt und anschließend der Ethendruck auf 8 bar eingestellt. Die Polymerisationsdauer betrug 2 h, wobei bei der exothermen Reaktion keine Temperaturkontrolle stattfand. Nach beendeter Reaktion wurde der Reaktor entspannt und die Polymerisation durch Zugabe einer Mischung aus je 5 ml Isopropanol/Methanol gestoppt. Anschließend wurde der Autoklaveninhalt in 300 ml Methanol/HCl gegossen und das ausgefallene Polymer nach Filtration getrocknet.

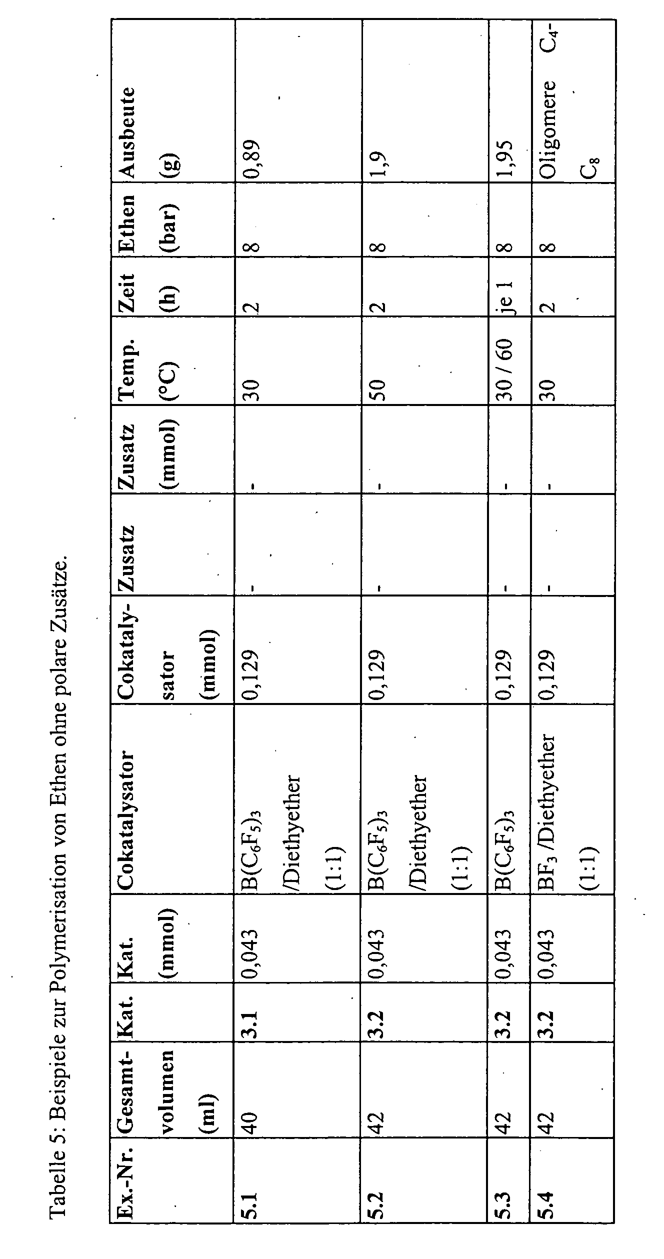

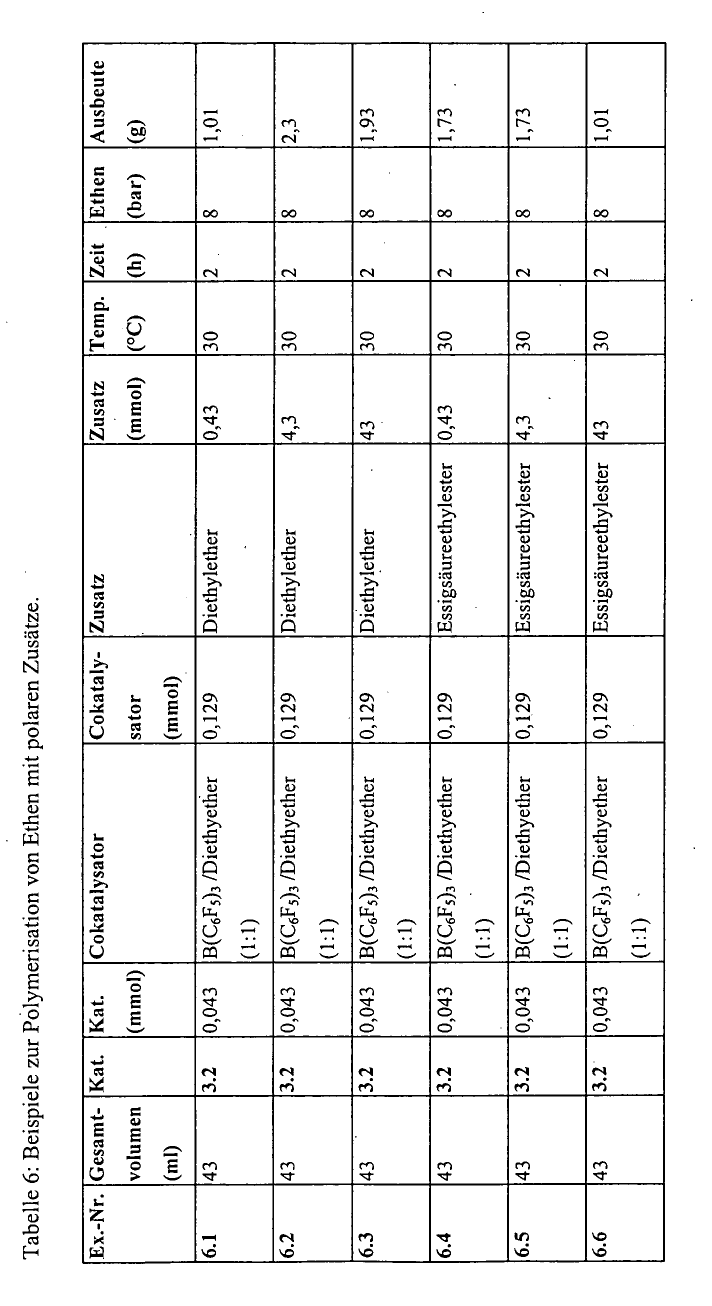

### Polymerisationsbeispiele für in situ hergestellte Katalysatoren:

### Katalysatormischung Nickel [Ni]

Das Li-Salz der Azoverbindung wird in 1 ml Toluol gelöst. Zu dieser Lösung wird 1 ml Chlorbenzol gegeben. Anschließend wird Ni(COD)₂ gelöst in 1 ml Toluol bei -20°C zugegeben. Die erhaltene Lösung wird auf 25°C erwärmt und sodann zur Polymerisation eingesetzt.

### Katalysatormischung Palladium [Pd]

Die Azoverbindung wird in 3 ml Toluol gelöst und zu einer Suspension des Palladiumkomplexes in 3 ml 1,5 Cyclooctadien bei 0°C transferiert. Die Reaktionslösung wird 2 h bei 25°C gerührt.

### Allgemeine Arbeitsvorschrift zur Polymerisation

In einem sekurierten 300 ml Stahlautoklaven mit Glaseinsatz wurden Toulol, der polare Zusatz, der Aktivator, und Lösung der Katalysatormischung in dieser Reihenfolge mittels einer Kanüle zugegeben. Anschließend wurde die Mischung 0.5 h bei 30°C gerührt und anschließend der Ethendruck auf 8 bar eingestellt. Die Polymerisationsdauer betrug 2 h, wobei bei der exothermen Reaktion keine Temperaturkontrolle stattfand. Nach beendeter Reaktion wurde der Reaktor entspannt und die Polymerisation durch Zugabe einer Mischung aus je 5 ml Isopropanol/Methanol gestoppt. Anschließend wurde der Autoklaveninhalt in 300 ml Methanol/HCl gegossen und das ausgefallene Polymer nach Filtration getrocknet.

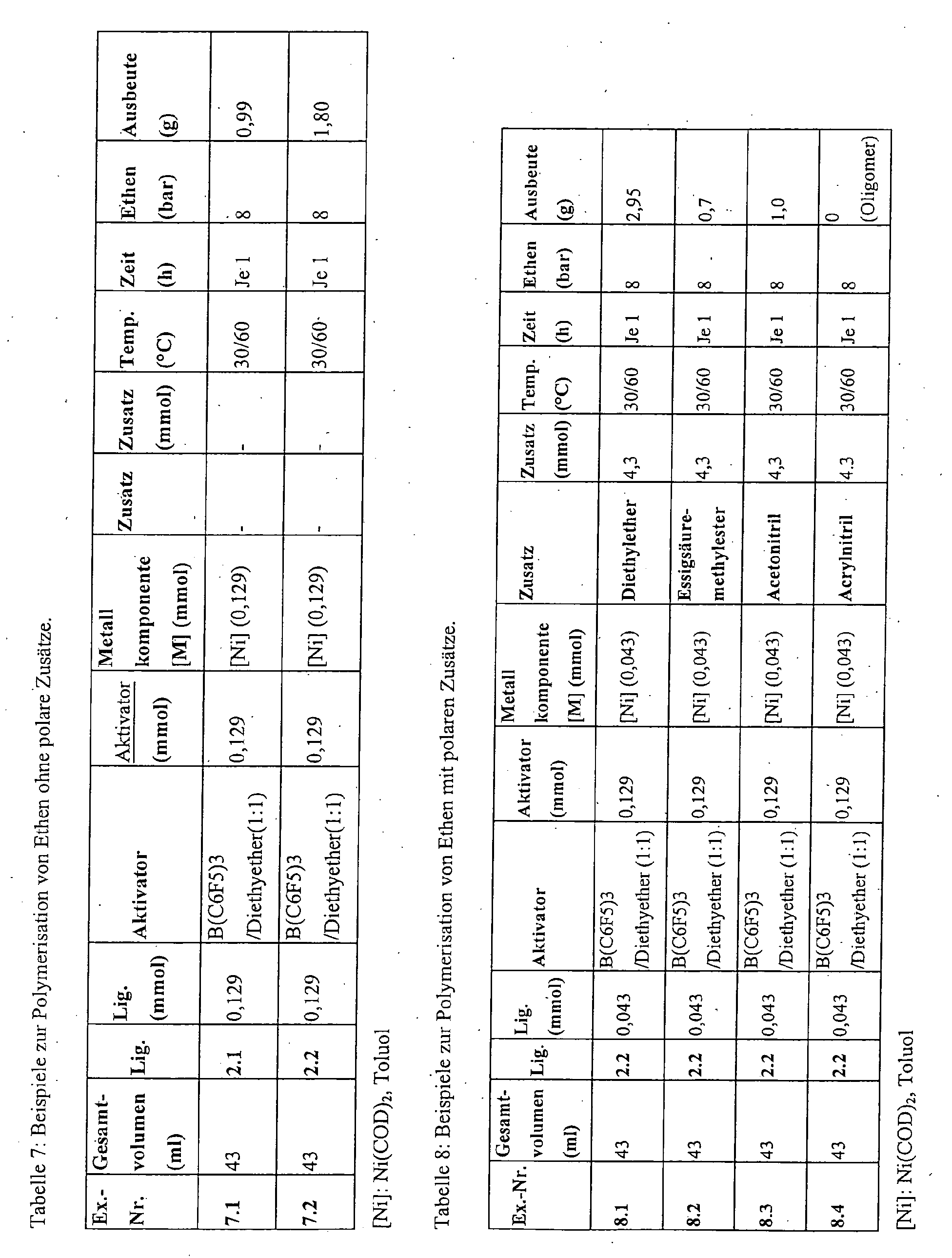

## Patentansprüche

1. Verbindung der allgemeinen Formel (I) 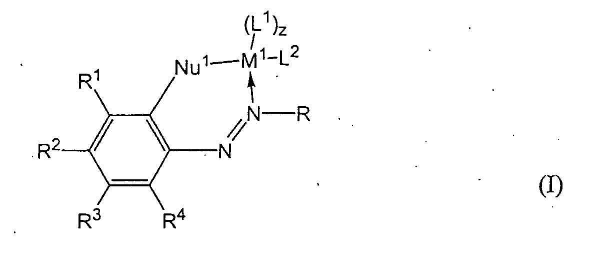 wobei
Nu¹ für -O, -S, -Se, -PR^{a}, -NR^{a}, oder -COO-Gruppen,
R^{a} für Wasserstoff, Alkyl- oder Arylreste steht und
R, R¹, R², R³ und R⁴ gleich oder verschiedene Reste sind, die unabhängig voneinander ausgewählt sind aus der Gruppe bestehend aus H, Halogene, substituierten oder unsubstituierten C₁-C₈-Alkyl-, C₂-C₈-Alkenyl-, C₃-C₁₂-Cycloalkyl-, C₇-C₁₃-Aralkyl- und C₆-C₁₄-Arylgruppen und R¹ mit R², R³ oder R⁴ und R² mit R³ oder R⁴ einen Ring ausbilden kann,
M¹ für ein Element der 4. bis 12. Nebengruppe des Periodensystems steht,
L¹ ein Neutralligand ist und
L² ein anionischer Ligand ist, wobei L¹ und L² miteinander durch eine oder mehrere kovalente Bindungen verknüpft sein können und
z eine ganze Zahl von 1 bis 3 ist.

2. Verbindung nach Anspruch 1, wobei
Nu¹ O ist,
R ausgewählt ist aus der Gruppe bestehend aus substituierten oder unsubstituierten C₆-C₁₄-Aralkylgruppen
R¹, R², R³ und R⁴ gleich oder verschiedene Reste sind und unabhängig voneinander ausgewählt sind aus der Gruppe bestehend aus H, substituierten oder unsubstituierten C₁-C₈-Alkylgruppen, C₂-C₈-Alkenylgruppen, C₃-C₁₂-Cycloalkylgruppen, C₇-C₁₃-Arallcylgruppen, C₆-C₁₄-Arylgruppen
M¹ ausgewählt ist aus der Gruppe bestehend aus Ti, Zr, Hf, Cr, V, Fe, Co, Ni, Ru, Rh, Pd, Os, Ir, Pt, Cu, Ag, Au, Zn, Cd und Hg
L¹ ein organischer oder anorganischer Neutralligand ist, ausgewählt aus der Gruppe bestehend aus Phospanen, der allgemeinen Formel (R¹³)ₓPH_{3-x,} Amine mit der allgemeinen Formel (R¹³)ₓNH₃₋ₓ, Ether mit der allgemeinen Formel (R¹³)₂O, Alkohole mit der allgemeinen Formel (R¹³)OH, Pyridinderivate mit der allgemeinen Formel C₅H₅₋ₓ(R¹³)ₓN, CO, C₁-C₁₂-Alkylnitril, C₆-C₁₄-Arylhitril und einfach oder mehrfach ethylenisch ungestättigte Doppelbindungssysteme, wobei
R¹³ ausgewählt ist aus der Gruppe bestehend aus H, C₁-C₈-Alkylgruppen, Benzylresten und C₆-C₁₄-Arylgruppen und
x für eine ganze Zahl von 0 bis 3 steht, und
L² ein anionischer Ligand ist, ausgewählt aus der Gruppe bestehend aus Halogenidionen, Amidanionen der Formel R¹⁴R¹⁵N, C₁-C₆-Alkylanionen, Allylanionen, Methallylanionen, Benzylanionen und Arylanionen, wobei
R¹⁴ und R¹⁵ unabhängig voneinander ausgewählt sind aus der Gruppe bestehend aus H, C₁-C₈-Alkylgruppen, Benzylresten und C₆-C₁₄-Arylgruppen und R¹⁴ mit R¹⁵ auch kovalent verknüpft sein kann und
z eine ganze Zahl von 1 bis 3 sein kann.

3. Verbindung nach einem der Ansprüche 1 bis 2, wobei
Nu¹ O ist,
R Mesityl, 2,4,6-Trimethylphenyl oder 2,6-Diisopropylphenyl ist,
R¹, R², R³ und R⁴ gleich oder verschiedene Reste sind und unabhängig von einander ausgewählt sind aus der Gruppe bestehend aus H, C₁-C₈-Alkylgruppen und C₆-C₁₄-Arylgruppen
M¹ ausgewählt ist aus der Gruppe bestehend aus Ti, Zr, Cr, V, Fe, Co, Ni, Pd, Cu und Zn
L¹ ein Neutralligand ist, ausgewählt aus der Gruppe bestehend aus Triphenylphosphin, Triethylphosphin, Trimethylphosphin Dibenzophosphol, Triphenylphosphit, Triethylphosphit, Trimethylphosphit, Triphenylphosphit, Trimethylamin, Triethylamin, Dimethylanilin, . Diethylanilin, Benzyldimethylamin, Benzyldieethylamin, Diisopropylamin, Diethylamin, Dimethylamin, Diphenylamin, Phenylendiamine, Diethylether, Tetrahydrofuran, Wasser, Methanol, Ethanol, Pyridin, 2-Picolin, 3-Picolin, 4-Picolin, 2,3-Lutidin, 2,4-Lutidin, 2,5-Lutidin, 2,6-Lutidin, 3,5 Lutidin, CO, Acrylnitril, Acetonitril, Propionitril, Butyronitril, Benzonitril, Ethenyl, Propenyl, cis-2-Butenyl, trans-2-Butenyl, Cyclohexenyl und Norbomenyl,
L² ein anionischer Ligand ist, ausgewählt aus der Gruppe bestehend aus Chlorid, Bromid, Dimethylamid, Diethylamid, Amid, 2-Carbonsäureestermetallyl, Allyl, Methyl, Ethyl, n-Propyl, 1-Propyl, n-Butyl, tert.-Butyl, Hexyl und Phenyl
z eine ganze Zahl von 1 bis 3 sein kann.

4. Verbindung nach einem der Ansprüche 1 bis 3, wobei
Nu¹ O ist,
R Mesityl oder 2,6-Diisopropylphenyl
R¹ tert-Butyl oder Phenyl
R² H
R³ tert.-Butyl
R⁴ H
M¹ Ni oder Pd
L¹ Triphenylphosphan oder Pyridin
L² Phenyl oder Methyl und
z eine ganze Zahl von 1 bis 3 ist.

5. Ein Verfahren zur Herstellung der Verbindungen nach einem der Ansprüchen 1 bis 4, wobei ein Ligand der allgemeinen Formel (II) 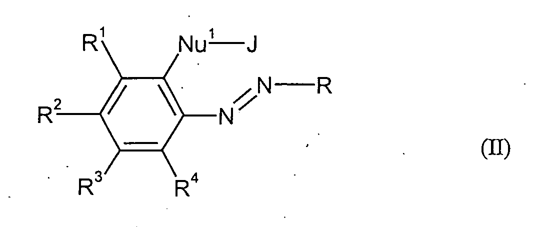 mit
J ausgewählt aus der Gruppe bestehend aus H, und einem Element der 1. oder 2. Hauptgruppe des Periodensystems und wobei
Nu¹, R, R^{1,}R², R³, R4 die gleiche Bedeutung hat wie in Anspruch 1,
mit 0,2 bis 5 Äquivalenten einer Metallverbindung der allgemeinen Formeln
M¹X₄, M¹X₃, M¹L¹L², oder M¹X₂
umgesetzt wird, wobei
M¹, L¹ und L² die gleiche Bedeutung haben wie in Anspruch 1 und
X ausgewählt ist aus der Gruppe bestehend aus Halogen, C₁-C₈-Alkyl-, C₃-C₁₂-Cycloalkyl-, C₇-C₁₃-Aralkyl- und C₆-C₁₄-Arylgruppen und wobei M¹X₄, M¹X₃oder M¹X₂ durch weitere Neutralliganden stabilisiert werden können.

6. Ein Verfahren zur Herstellung der Verbindungen nach Anspruch 5, wobei die Verbindungen nach Umsetzung des Liganden mit den Metallverbindungen durch Kristallisation gereinigt und isoliert werden.

7. Verfahren zur Herstellung der Verbindungen nach Anspruch 5, wobei die Darstellung in situ erfolgt.

8. Verfahren zur Herstellung der Verbindungen nach Anspruch 5, wobei der Ligand und die Metallverbindung in Gegenwart eines oder mehrerer olefinischer Monomere in situ umgesetzt wird.

9. Verfahren zur Herstellung der Verbindungen nach einem der Ansprüche 1 bis 4, wobei in aprotischen polaren Lösungsmitteln gearbeitet wird.

10. Verwendung der Verbindungen nach einem der Ansprüche 1 bis 4 als Katalysatoren.

11. Verwendung der Verbindungen nach einem der Ansprüche 1 bis 4 als Polymerisationskatalysatoren.

12. Verfahren zur Herstellung von Olefin-(Co)-Polymeren, wobei Verbindungen nach einem der Ansprüche 1 bis 4 in Gegenwart von olefinischen Monomeren ausgewählt aus der Gruppe bestehend aus 1-Olefinen, Cycloolefinen, funktionalisierten 1-Olefinen und Mischungen derselben umgesetzt werden.

13. Verfahren nach Anspruch 10, wobei Bor- oder Aluminiumverbindungen als Cokatalysatoren zum Reaktionsgemisch hinzugegeben werden.

14. Verfahren nach Anspruch 11, wobei das Molverhältnis von Cokatalysator zu Metall M' in der Verbindung nach Formel (I) im Bereich von 1:10 bis 1: 10000 liegt.

15. Verfahren nach einem der Ansprüche 11 bis 12, wobei Alumiumoxane als Cokatalysatoren eingesetzt werden.

16. Verfahren nach einem der Ansprüche 10 bis 13, wobei die Polymerisation in polaren Lösungsmitteln oder Lösungsmittelgemischen durchgeführt wird.

17. Reaktionsprodukte erhältlich durch Umsetzung der Verbindungen nach einem der Ansprüche 1 bis 4 mit den Cokatalysatoren.

18. Olefin-(Co)-Polymer erhältlich durch das Verfahren nach Anspruch 10.

19. Verwendung des Olefin-(Co)-Polymers zur Herstellung von Formteile aller Art.

20. Formteile erhältlich durch Verarbeitung des Olefm-(Co)-Polymers nach Anspruch 17.
